Europäisches Patentamt

(19) European Patent Office

Office européen des brevets

(11) Publication number : **0 324 019 B1**

(12) **EUROPEAN PATENT SPECIFICATION**

(45) Date of publication of patent specification :
27.01.93 Bulletin 93/04

(21) Application number : 88906708.8

(22) Date of filing : 15.07.88

(86) International application number :
PCT/US88/02360

(87) International publication number :
WO 89/00679 26.01.89 Gazette 89/03

(51) Int. Cl.⁵ : **G01F 1/84**

(54) **IMPROVED ACCURACY MASS FLOW METER WITH ASYMMETRY AND VISCOUS DAMPING COMPENSATION.**

(30) Priority : **15.07.87 US 73709**

(43) Date of publication of application :
**19.07.89 Bulletin 89/29**

(45) Publication of the grant of the patent :
**27.01.93 Bulletin 93/04**

(84) Designated Contracting States :
**AT BE CH DE FR GB IT LI LU NL SE**

(56) References cited :
**EP-A- 0 109 218**
**WO-A-86/00699**

(73) Proprietor : **MICRO MOTION INCORPORATED**
**7070 Winchester Circle**
**Boulder Colorado 80301 (US)**

(72) Inventor : **TITLOW, Joseph, D.**
**1773 Hawthorne Place**
**Boulder, CO 80302 (US)**
Inventor : **KALOTAY, Paul, Z.**
**10080 Phillips Road**
**Lafayette, CO 80026 (US)**

(74) Representative : **Hallybone, Huw George et al**
**CARPMAELS AND RANSFORD 43 Bloomsbury Square**
**London WC1A 2RA (GB)**

EP 0 324 019 B1

Jouve, 18, rue Saint-Denis, 75001 PARIS

## Description

The present invention relates to Coriolis mass flow rate meters that include one or more flow conduits which are driven to oscillate at the resonant frequency associated with the combined mass of the flow conduit and the fluid flowing therethrough. The drive frequency is maintained at resonance by a feedback system, which detects a change in the resonant behavior of the fluid-filled conduit as a result of the fluid mass change due to the change in fluid density. The flow conduits used in these Coriolis mass flow rate meters are mounted so they can oscillate at the resonant frequency associated with the oscillation axis about which externally applied forces act to oscillate each flow conduit. The flow conduit also deforms about another axis which is associated with deflections of each flow conduit caused by Coriolis forces arising from the combination of the driven oscillation and flow of fluids through the flow conduit. The axis associated with Coriolis deflections is substantially transverse to the oscillation axis. According to the present invention greater accuracy of measurement at high flow rates is obtained in flow meter designs which employ signal processing which includes a non-linear phase angle difference relationship between the signals of motion sensors mounted on or adjacent the flow conduit. The present invention also accounts for asymmetries in flow conduit deflections and for viscous damping in the flow conduits due to properties of the flow conduit materials and the flow of fluids through the conduits.

In the art of measuring mass flow rates of flowing substances it is known that flowing a fluid through an oscillating flow conduit induces Coriolis forces to act on the conduit. It is also known that the magnitudes of such Coriolis forces are related to both the mass flow rate of the fluid passing through the conduit and the angular velocity at which the conduit is oscillated.

One of the major technical problems previously associated with efforts to design and make Coriolis mass flow rate instruments was the necessity either to measure accurately or control precisely the angular velocity of an oscillated flow conduit so that the mass flow rate of the fluid flowing through the flow conduits could be calculated using measurements of effects caused by Coriolis forces. Even if the angular velocity of a flow conduit could be accurately determined or controlled, precise measurement of the magnitude of effects caused by Coriolis forces was another severe technical problem. This problem arises in part because the magnitudes of generated Coriolis forces are very small in comparison to other forces such as inertia and damping, therefore resulting Coriolis force-induced effects are minute. Further, because of the small magnitude of the Coriolis forces, effects resulting from external sources such as vibrations induced, for example, by neighboring machinery or pressure surges in fluid lines, may cause erroneous determinations of mass flow rates. Such error sources as discontinuities in the flow tube may even completely mask the effects caused by generated Coriolis forces rendering a flow meter useless.

A mechanical structure and measurement technique which, among other advantages: (a) avoids the need to measure or control the magnitude of the angular velocity of a Coriolis mass flow rate instrument's oscillating flow conduit; (b) concurrently provides requisite sensitivity and accuracy for the measurement of effects caused by Coriolis forces; and, (c) minimizes susceptibility to errors resulting from external vibration sources, is taught in United States Patent Nos. Re 31,450, entitled "Method and Structure for Flow Measurement" and issued November 29, 1983; 4,422,338 entitled "Method and Apparatus for Mass Flow Measurement" and issued December 27, 1983; and 4,491,025 entitled "Parallel Path Coriolis Mass Flow Rate Meter" and issued January 1, 1985. The mechanical arrangements disclosed in these patents incorporate flow conduits having no pressure sensitive joints or sections, such as bellows or other pressure deformable portions. These flow conduits are solidly mounted in a cantilevered fashion from their inlet and outlet ports. For example, in U.S. Patent No. 4,491,025 but not limited thereto, the flow conduits can be welded or brazed to a support, so they can be oscillated in spring-like fashion about axes which are located near the solidly mounted sections of the flow conduits. Additionally these solidly mounted flow conduits are preferably designed so they have resonant frequencies about the axes located near the mountings which are lower than the resonant frequencies about the axes relative to which Coriolis forces act. By so designing the flow conduits, a mechanical situation arises whereby, under flow conditions, the forces opposing generated Coriolis forces are essentially linear spring forces. The Coriolis forces, opposed by essentially linear spring forces, deflect the flow conduit containing flowing fluid about axes located between and essentially equidistant from the portions of the flow conduits in which Coriolis forces are generated. The magnitudes of the deflections are a function of the magnitudes of the generated Coriolis forces and the linear spring forces opposing the generated Coriolis forces.

As stated above, the flow conduits, in addition to being deflected by the Coriolis forces, are also driven to oscillate. Accordingly, under flow conditions, one portion of each flow conduit on which the Coriolis forces act will be deflected so as to move ahead, in the direction in which the flow conduit is moving, of the other portion of the flow conduit on which Coriolis forces are acting. The time or phase relationship between when the first portion of the oscillating flow conduit deflected by Coriolis forces has passed a preselected point on the path of oscillation for the flow conduit to the instant when the second portion passes a corresponding preselected point in a function of the mass flow rate of the fluid passing through the flow conduit.

A number of other Coriolis mass flow meters have been developed which are governed by similar equations of motion. Among these are specific embodiments disclosed in United States Patent No. 4,127,028 (Cox et al., 1978), U.S. Patent No. 4,559,833 (Sipin, 1985), U.S. Patent No. 4,622,858 (Mizerak, 1986), PCT Application No. PCT/US85/01046 (Dahlin, filed 1985) and U.S. Patent No. 4,660,421 (Dahlin, et al., 1987).

Prior art mass flow meters have been limited in their accuracy by the method of processing motion sensor signals and the relationship used in such processing. This limitation becomes important for phase angle differences above the range of 3 to 4 degrees (.0524 to .0698 radians). The three Smith patents named above employ a linear relationship between the time difference of two portions of the flow conduit passing through a preselected point and mass flow rate. This time difference measurement may be made by optical sensors as specifically exemplified in U.S. Patent No. Re 31,450, electromagnetic velocity sensors as specifically exemplified in U.S. Patent Nos. 4,422,338 and 4,491,025, or position or acceleration sensors as also disclosed in U.S. Patent No. 4,422,338.

A double flow conduit embodiment with sensors for making the preferred time measurements is described in United States Patent No. 4,491,025. The double flow conduit embodiment described in United States Patent No. 4,491,025 provides a Coriolis mass flow rate meter structure which is operated in a tuning fork-like manner as is also described in United States Patent No. Re 31,450. The tuning fork operation contributes to minimizing effects of external vibration forces. Minimizing effects of external vibration forces is important because these forces can induce errors in the required time measurement.

The approach which has been taken in the prior art has been to assume that flow conduits exhibit symmetrical behavior in the deformations about the Coriolis axis transverse to the oscillation axis. This is because an assumed absence of damping permits each portion of the flow conduit to respond essentially identically to the forces acting on the tube as would portions located symmetrically about the transverse axis. As one skilled in the art will recognize from the disclosures herein, a general solution to phase angle difference equations, assuming no asymmetrical behavior of the flow conduit, yields the following expression for mass flow:

$$\dot{m}_o = -\left(\frac{\sqrt{2}f_b}{2c_b\dot{u}_d}\right) k_c \frac{\sqrt{(\omega_c^2 - \omega_d^2)^2 + (2\omega_c\omega_d\,\zeta_c)^2}}{\omega_c^2} \qquad (1)$$

$$\times \frac{\sin(\delta\theta/2)}{\omega_d\sqrt{1 + \cos(2\phi_c)\cos(\delta\theta)}} \cdot$$

where the meaning of the variables and parameters for this and all subsequent equations is given in Table 1, herein.

The mass flow rate measurement scheme embodied in eq.(1) is identical with previously published schemes, e.g. U.S. Patent No. Re 31,450. The correspondence can be shown by eliminating some of the additional considerations of this analysis.

Assume the phase angle difference $\delta\theta$ is sufficiently small that

$$\sin(\delta\theta/2) \cong \delta\theta/2 \quad (2)$$
$$\cos(\delta\theta) \cong 1 \quad (3)$$

As shown herein, the phase angle difference and time delay $\delta t$ are related by

$$\delta\theta = \omega_d\delta t \quad (4)$$

where

$$\delta t = t_r - t_l \quad (5)$$

Using eqs.(2) and (3) together with eq.(4) in eq. (1) gives

$$\dot{m}_o = -\left(\frac{\sqrt{2}f_b}{4c_b\,\dot{u}_d}\right) k_c \frac{\sqrt{(\omega_c^2 - \omega_d^2)^2 + (2\omega_c\,\omega_d\,\zeta_c)^2}}{\omega_c^2} \tag{6}$$

$$\times \frac{\delta t}{\sqrt{1 + \cos(2\phi_c)}}$$

Thus, when the phase angle difference is small, which is typically true for phase angle differences below 3 to 4 degrees, the general solution to the phase angle difference equations reduces to a time delay mass flow measurement scheme. The simple change of variables from time to phase angle (eq.50, herein) does not alter the physics of the mass flow measurement scheme. Taking account of the nonlinear phase angle difference relationship for phase angle differences above 3 to 4 degrees, does, however, increase the range of mass flow rate measurement accuracy.

If the viscous damping associated with the Coriolis motions of the flow tube is sufficiently small, it can be neglected. The critical damping ratio $\zeta_c$ is set to zero in eq.(6) resulting in

$$\phi_c = 0 \tag{7}$$

$$\dot{m}_o = -\left(\frac{f_b}{4c_b\,\dot{u}_d}\right) k_c [1 - (\omega_d/\omega_c)^2]\delta t \tag{8}$$

As before, the first term in the parentheses is a constant, as is the spring constant $k_c$. Equation (8) states that when damping can be neglected, the mass flow rate scheme developed from the phase angle difference equations is identical to a constant times the frequency response term times the time delay.

It is assumed that the combined inertia of the flow tube, appendages, and fluid is sufficiently low that it can be neglected. As one skilled in the art will recognize, as the mass becomes smaller, the natural frequency $\omega_c$ increases. In the limit, as m goes to zero, $\omega_c$ tends to infinity, such that the frequency response term in eq.(8) approaches unity. Thus, when inertia is neglected, the mass flow rate measurement scheme based on the phase angle difference equations reduces to

$$\dot{m}_o = -\left(\frac{f_b}{4c_b\,\dot{u}_d}\right) k_c\,\delta t \tag{9}$$

Equation (9) is identical in form to the mass flow rate equation of U.S. Patent No. Re 31,450. This equation can be presented as a phase angle difference equation by substituting the expression

$$\delta t = \frac{\delta\theta}{\omega_d} \tag{10}$$

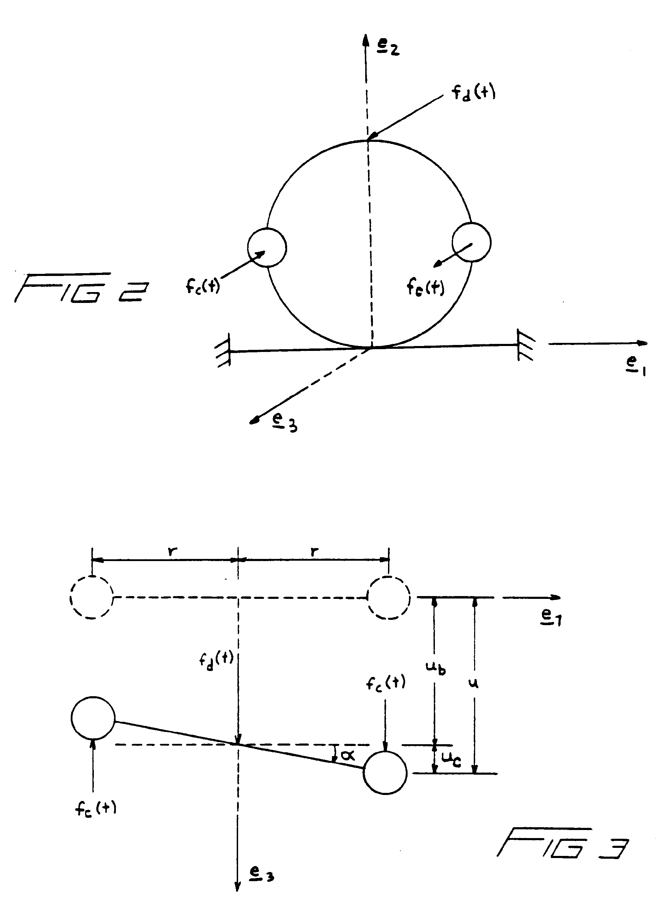

The non-linear relationship employed in the Dahlin PCT Appln. No. PCT/US85/01046 is reached by employing mutually contradictory assumptions of the existence of damping and the lack of damping to develop the underlying zero crossing equations and their solutions. In addition, asymmetric effects are ignored. This results in two equations in the solution which are reduced to a single solution by assuming zero damping. The Dahlin non-linear relationship can be reached by one skilled in the art by employing the following phase angle difference equations based on a lumped parameter model shown in Figure 2, herein:

$$\left(\frac{f_b}{\omega_d\,c_b}\right) \sin(\delta\theta/2) + H_c \cos(\delta\theta/2 - \phi_c) = 0 \tag{11}$$

$$\left(\frac{f_b}{\omega_d \, c_b}\right) \sin(\delta\theta/2) + H_c \cos(\delta\theta/2 + \phi_c) = 0 \qquad (12)$$

If electronics are coupled to the outputs of velocity sensors such that the phase angle difference $\delta\theta$ is measured, then at a zero crossing either eq.(11) or (12) presented herein can be solved for the amplitude function $H_c$. Well-known mathematical identities can be used to expand eq.(12), and then dividing by $\cos(\delta\theta/2)$, which never is zero for realistic $\delta\theta$, the following expression for $H_c$ results:

$$H_c = -\left(\frac{f_b}{c_b}\right) \frac{\tan(\delta\theta/2)}{\omega_d \, (\cos\phi_c - \sin\phi_c \tan(\delta\theta/2))} \qquad (13)$$

However, $H_c$ is related to the mass flow rate through eq.(37), presented herein. Setting eq.(13) equal to eq.(37) and solving for the mass flow rate yields

$$\dot{m}_o = -\left(\frac{f_b}{2c_b \dot{u}_d}\right) k_c \frac{\sqrt{(\omega_c^2 - \omega_d^2)^2 + (2\omega_c \omega_d \zeta_c)^2}}{\omega_c^2} \qquad (14)$$

$$\times \frac{\tan(\delta\theta/2)}{\omega_d \, (\cos\phi_c - \sin\phi_c \tan(\delta\theta/2))}$$

An alternate form for eq.(14) is obtained by setting

$$\phi = \frac{\pi}{2} - \phi_c \qquad (15)$$

Substituting eq.(15) into eq.(14) and using well-known mathematical identities yields

$$\dot{m}_o = -\left(\frac{f_b}{2c_b \dot{u}_d}\right) k_c \frac{\sqrt{(\omega_c^2 - \omega_d^2)^2 + (2\omega_c \omega_d \zeta_c)^2}}{\omega_c^2} \qquad (16)$$

$$\times \frac{\tan(\delta\theta/2)}{\omega_d \, [\sin\phi - \cos\phi \tan(\delta\theta/2)]}$$

Equation (16) is the mass flow measurement scheme given by PCT Appln. No. PCT/US85/01046. Note that the first term in parentheses is a non-dimensional constant, since it is assumed that the ratio $f_b/\dot{u}_d$ is constant for any particular driver design. Also note that eq.(16) shows how the measurement of mass flow rate depends on the frequency response of the flow tube.

Equation (16) is not the only mass flow measurement scheme that can be generated from the phase angle difference equations (11) and (12). Equation (16) resulted from manipulations on eq.(12) only. The same procedures applied to eq.(11) yields

$$\dot{m}_o = -\left(\frac{f_b}{2c_b\dot{u}_d}\right) k_c \frac{\sqrt{(\omega_c^2 - \omega_d^2)^2 + (2\omega_c\,\omega_d\,\zeta_c)^2}}{\omega_c^2} \qquad (17)$$

$$\times \frac{\tan(\delta\theta/2)}{\omega_d\,[\sin\phi + \cos\phi\,\tan(\delta\theta/2)]}$$

Note that eq.(17) is identical with eq.(16) except that the sign of the last term in the denominator has changed. This is a contradiction, and at least one of the mass flow measurement schemes embodied in these equations (16) and (17) must be incorrect. The contradiction is removed for the case of zero damping. Equation (36) indicates that $\phi_c$ is zero when $\zeta_c$ is zero. By eq.(15), the phase angle becomes $\pi/2$. Making this substitution in eqs.(16) and (17) makes them identical.

If the simplifications are made in eqs.(16) and (17) that were made to the general solution, eq.(1), then the result is the linearized formula of eq.(9).

The source of the error with the PCT Appln. No. PCT/US85/01046 approach is that the solution is not unique. There the mass flow equation is contradicted by a companion equation developed by identical methods. As explained above, both equations cannot be correct in the general case. For the special case of no damping in the Coriolis motions, the two equations (16) and (17) become identical, but this violates the assumption of non-zero damping used throughout PCT Appln. No. PCT/US85/01046. The new solution of the phase angle difference equations given by equation (71) disclosed herein overcomes this contradiction.

Prior mass flow measurement schemes have employed assumptions which are limited in their appropriateness to the materials of which the flow conduit is made. Both U.S. Patent No. Re 31,450 and PCT Appln. No. PCT/US85/01046 ignore the asymmetry considerations disclosed herein, to assume that the time or phase angle difference between the motion of one portion of the flow conduit and the locus of the intersection of the conduit with a plane bisecting the conduit into two equal portions is equal to the time or phase angle difference between the motion of an opposed symmetrically-located portion of the flow conduit and the same locus. The damping of the mechanical system influences the degree of asymmetry, however. For systems having little damping, such as when the flow tubes are made from metal tubing, the amount of asymmetry is too small to measure (on the order of a few millionths of a degree). For these cases, it is appropriate to assume symmetry of the motion sensor signals with respect to the driver signal. If non-metallic tubes are used, however, it is expected that the inherent damping of such materials would create an amount of asymmetry large enough to measure, and hence of sufficient magnitude for correction in the mass flow rate determination. Suitable non-metallic materials include, but are by no means limited to, high-temperature glass, such as PYREX, manufactured by the Corning Glass Company, high-temperature ceramics, or fiber-reinforced high mechanical strength, temperature-resistant plastics. Additionally, the flowing fluids through flow conduits produce viscous damping which can be accounted for by appropriate modeling, as described herein. This modeling, which employs lumped parameters, accounts for both the damping due to the flow conduit properties and the damping due to the flow of fluids through the conduits.

WO-A-86/00699 also discloses an apparatus for mass flow rate measurement. This prior art apparatus operates to determine mass flow in accordance with a particular equation.

Prior art mass flow devices have permitted the determination of fluid density. See, for example, U.S. Patent Nos. Re 31,450, and 4,491,009 which disclose such a density determination. Specific density meter circuitry embodiments are disclosed by Ruesch in U.S. Patent Application Nos. 916,973 and 916,780, both filed October 9, 1986. These circuits can be employed with the embodiments disclosed herein to determine density as well as mass flow rate.

According to the present invention there is provided a flow meter for flowable materials comprising:

a. a support;

b. a continuous conduit which

(1) is free of pressure sensitive joints,

(2) is solidly mounted to said support at an inlet end and an outlet end of said conduit,

(3) has an oscillation axis and a second axis, substantially transverse to said oscillation axis, about which Coriolis force acts when fluid is flowing through said conduit under oscillation conditions;

c. driver means for oscillating said conduit about said oscillation axis;

d. sensor means for measuring motion of said conduit as a result of elastic deformation of said conduit around said second axis thereof upon oscillation of said conduit with fluid flow therethrough, thereby providing motion signals; and

e. signal processing means, comprising:

(1) means for measuring frequency of oscillation of said conduit;

(2) logic means for converting said frequency of oscillation to a frequency response function;

(3) logic means for comparing said motion signals to determine a phase angle difference between said signals; and

(4) logic means for converting said phase angle difference to a half-angle tangent function of said phase angle difference;

said signal processing means including:

logic means for, mathematically combining said frequency response function, said frequency of oscillation and said half-angle tangent function with at least one calibration constant and which comprise means which are arranged to calculate mass flow rate $\dot{m}_o$ according to the formula

$$\dot{m}_o = K_1 \, k_c \, R \, \frac{\tan (\delta\Theta°/2)}{\omega_d}$$

where

$\delta\Theta°$ is a phase angle difference between output signals developed by said motion sensors;

$\tan (\delta\Theta°/2)$ is a half-angle tangent function;

$K_1$ is a calibration constant proportional to a ratio of a bending force acting on said flow conduit to a viscous damping force acting on said flow conduit;

$k_c$ is an elastic spring constant of said flow conduit which is fixed at constant temperature and is otherwise temperature compensated;

$$R = \frac{\sqrt{(\omega_c^2 - \omega_d^2)^2 + (2\omega_c\omega_d\zeta_c)^2}}{\omega_c^2}$$

is a frequency response function;

$\omega_d$ is a natural frequency of said flow conduit about said oscillation axis;

$\omega_c$ is a natural frequency of said flow conduit about said second axis,

$\zeta_c$ is a damping coefficient about said second axis;

whereby a mass flow rate measurement is obtained.

The present invention further provides a flow meter for flowable materials comprising alternative means which are arranged to calculate the mass flow rate $\dot{m}_o$ according to the alternative formulae of independent claims 9, 12, 15.

Several techniques are known in the prior art for making damping measurements. For many applications the damping is constant, and very accurate modal analysis techniques can be employed. For example, the Modal 3.0 software produced by Structural Measurement Systems, Inc. of San Jose, California has been used to measure the damping of mass flow meters.

When the damping is not constant, a near continuous signal must be supplied. One technique is to monitor the power delivered by the drive system. This quantity is directly proportional to the damping in the system. Small changes in the drive frequency could also be used to make damping measurements. Another approach is to use standard decay techniques, such as described in the "Shock and Vibration Handbook", second edition, 1976, published by McGraw Hill Book Company. The measurement could be made on an intermittent basis so as not to interfere with the mass flow measurement.

The advantages of the embodiments disclosed herein are at least fourfold: (1) accuracy is preserved at high flow rates; (2) account can be taken for asymmetries between the motion sensor signals; (3) accurate mass flow measurement is permitted for higher signal-to-noise ratios; and (4) viscous damping is accounted for in three of the embodiments.

Specific embodiments of the present invention are now described, by way of example only, with reference to the accompanying drawings, in which:-

Figure 1 is a perspective view of an oscillating parallel path flow meter with both motion and temperature sensors mounted on oscillating tubes;

Figure 2 is a diagram which illustrates idealized geometry of a lumped parameter, single tube mass flow meter;

Figure 3 is a diagram which illustrates the geometric relationship of the superposition of bending and Coriolis motions of a lumped parameter mass flow meter;

Figure 4 is a graphical presentation of sinusoidal waveforms which illustrates zero crossings of motion sensors for two lumped masses and a driver;

Figure 5 is a graphical presentation of a representative asymmetric zero crossing for motion sensors for

7

two lumped masses and a driver;

Figure 6 is a block diagram of signal processing logic for an existing linearized signal processing approach incorporated in a mass flow meter to measure mass flow rate;

Figure 7 is a block diagram of signal processing logic for an embodiment of the invention for a symmetric nonlinear signal processing approach incorporated in a mass flow meter to measure mass flow rate;

Figure 8 is a block diagram of signal processing logic for an embodiment of the invention for an asymmetric nonlinear signal processing approach incorporated in a mass flow meter to measure mass flow rate;

Figure 9 is a block diagram of signal processing logic for half-angle polling, used in logic element 212 of Figure 8; and

Figure 10 is a block diagram of signal processing logic for an embodiment of the invention of an asymmetric nonlinear signal processing approach incorporated in a mass flow meter using one motion sensor to measure mass flow rate.

Figure 11 is a block diagram of signal processing logic for an embodiment of the invention for a signal processing approach incorporated in a mass flow meter to measure mass flow rate using one flow conduit motion sensor which accounts for asymmetries and viscous damping.

Figure 12 is a block diagram of signal processing logic for an embodiment of the invention for a signal processing approach incorporated in a mass flow meter to measure mass flow rate using one flow conduit motion sensor which accounts for asymmetries and viscous damping.

Figure 13 is a block diagram of signal processing logic for an embodiment of the invention for a signal processing approach incorporated in a mass flow meter to measure mass flow rate using two flow conduit motion sensors which account for asymmetries and viscous damping.

## A. Signal Processing Application

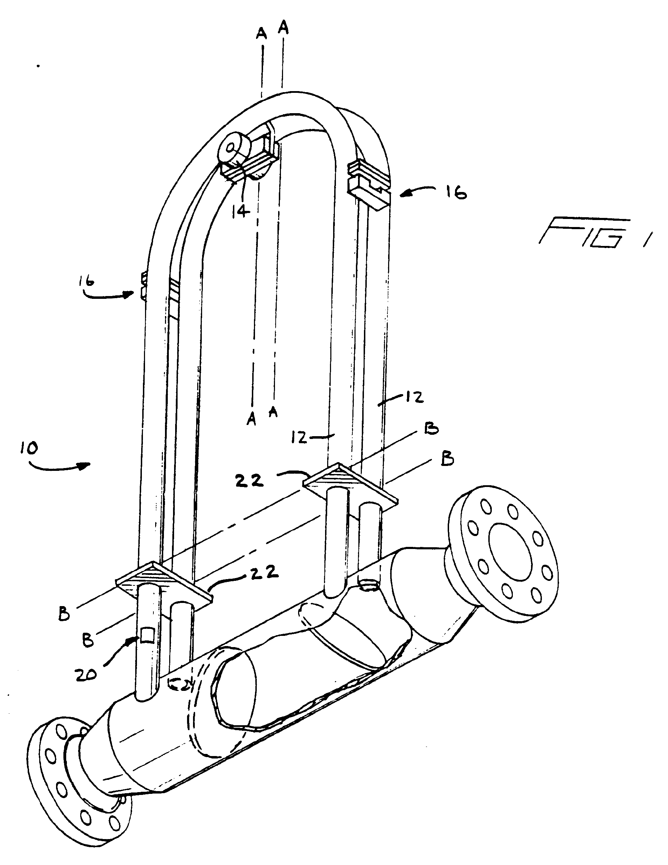

A Coriolis mass flow rate meter, as generally designated by numeral 10, for which the present invention can be used, is shown in Figure 1. The flow meter 10 incorporates twin flow conduits 12. The flow conduits 12 are solidly mounted to the supports 22, with the conduits being free of pressure-sensitive joints. Other arrangements utilizing a single flow conduit and a spring arm, or a single light weight flow conduit solidly mounted to a relatively massive support can also be used with the present invention. In addition, the invention herein is applicable to various shapes and configurations in which Coriolis force couples are generated by fluids flowing through solidly mounted oscillated flow conduits. This includes various full and partial loop shapes, S-shapes, B-shapes and straight tubes. As one skilled in the art will recognize, tube shape is not a limitation of the current invention. The flow meter 10, in addition to the flow conduits 12, includes a driver 14, such as a permanent magnet and wire coil combination as is known in the art, to oscillate the flow conduits 12 about axes B-B essentially 180 degrees out of phase with one another as the prongs of a tuning fork. The flow meter 10 further includes sensors 16 mounted on the flow conduits 12. The sensors 16 shown in Figure 1 are velocity sensors which continuously provide signals linearly representative of the actual movement of the flow conduits 12 over their entire path of motion. When the flow conduits 12 are oscillating and fluid is flowing through them, the flow conduits 12 are deflected about axes A-A by Coriolis forces. The effects of these deflections are monitored by the sensors 16. A detailed description of the mechanical operation of flow meter 10 is set forth in the aforementioned United States Patents: Re 31,450, 4,422,338 and 4,491,025.

Flow conduit temperature is monitored by temperature sensor 20, which is mounted on the flow conduit where flow is incoming. Temperature sensor 20 may be a resistance temperature device (RTD), a thermocouple or other temperature measurement device known in the art.

The sensors 16 are electromagnetic velocity sensors. Each sensor, 16, consists of a permanent magnet and a coil, with the coil designed so as always to be moved within the essentially uniform magnetic field of the magnet. Descriptions of the operation of sensors 16 for single and twin conduit Coriolis mass flow rate meters are set forth in the aforementioned United States Patents: 4,422,338 and 4,491,025.

The invention disclosed herein relates to the processing of motion sensor signals and a driver motion signal to determine accurately the mass flow rate of fluids passing through oscillated conduits. The flow conduits can be curved or straight and/or single or multiple. Motion sensor signals and driver motion signals are employed in various combinations to produce phase angle differences between the signals. The key feature is that the Coriolis forces produced by the combination of oscillation and flow yield a net phase angle difference which is related to mass flow rate.

The motion sensing transducers may be position or displacement, velocity or acceleration. In what follows, however, velocity sensors are discussed. This does not limit the use of other motion sensors. The primary requirements for the motion sensors are that their output signals have different phases as a result of the deformation of the flow conduit due to Coriolis force and that their output signals be linearly representative of the whole range of adjacent conduit motion. The driver yields a periodic, preferably sinusoidal signal. Other periodic wave forms can be used, but they have an increased harmonic content.

B. Theory of Operation

Figure 2 depicts a single loop flow meter idealized as a lumped parameter mass flow meter. The flow meter is modeled as two uncoupled masses with lumped elastic and damping characteristics. The model is based on an approach developed by Dahlin (1985, "Apparatus for Mass Flow Rate and Density Measurement," Patent Cooperation Treaty Application Number PCT/US85/01046). The flow tube is fixed at each end along the $\underline{e}_1$ axis of an inertial reference frame having mutually orthogonal axes $\underline{e}_1$, $\underline{e}_2$, and $\underline{e}_3$. The flow tube is symmetric about the $\underline{e}_2$ axis and lies entirely in the $\underline{e}_1$ - $\underline{e}_2$ plane. The elastic, damping and inertial properties of the flow tube are lumped at points on both the right and left sides of the flow tube as shown. Hence, in the discussion that follows, the subscripts "r" and "l" will be used to designate right and left. Of course, other orientations of the flow conduit are contemplated. For example, a U-tube is obtained from the geometry of Figure 2 by straightening the inlet and outlet flow tubes such that they are tangent to the upper curve. A sinusoidal drive force, $f_d(t)$, is applied at the top of the loop in transverse direction $\underline{e}_3$. Coriolis forces $f_c(t)$, are illustrated acting on the two lumped mass points. The analysis as presented herein is directed to curved tubes for the sake of simplicity. However, the equations of motion are applicable to any flow conduit configuration for which Coriolis force couples are generated by flow through an oscillated conduit. Figure 2 illustrates a curved conduit. As one skilled in the art will recognize, because the equations of motion are the same, the model derived is applicable to straight tubes as well as curved tubes.

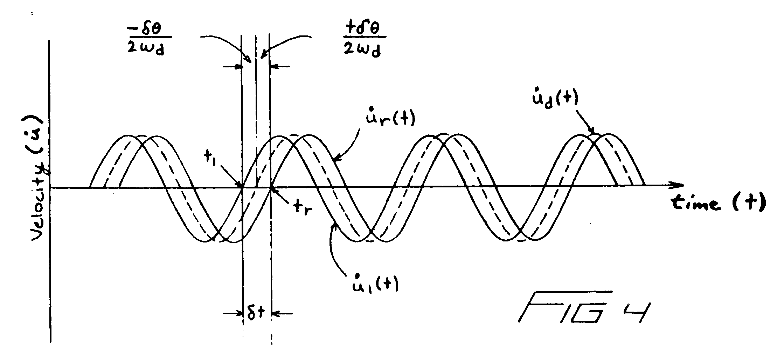

Figure 3 illustrates the characteristic motion of the idealized system of Figure 2. As shown in Figure 3, the flow conduit undergoes a displacement, u, along the $\underline{e}_3$ axis which has two components. The displacement component $u_b$ is the bending displacement along $\underline{e}_3$ that results from the drive force $f_d(t)$. The displacement component $u_c$ is the Coriolis displacement along $\underline{e}_3$. The total displacement is given by superposition of the solutions to the equations of motion for bending and Coriolis forces.

In the discussion which follows, the symbols used and their definitions are given in Table 1.

EP 0 324 019 B1

## Table 1 - System Parameters and Variables

| Symbol | Description | English Units | SI Units |
|---|---|---|---|
| $\dot{m}$ | mass flow rate | $lb_m/min$ | kg/min |
| $m_o$ | mass of fluid-filled flow tube | $lb_m$ | kg |
| $f$ | drive force | $lb_f$ | N |
| $f_b$ | Coriolis force | $lb_f$ | N |
| $f_c$ | viscous damping force | $lb_f$ | N |
| $c_o$ | bending damping constant | $lb_f - sec/in$ | N-sec/cm |
| $c_b$ | Coriolis damping constant | $lb_f - sec/in$ | N-sec/cm |
| $c_c$ | displacement | in | cm |
| $u$ | bending displacement | in | cm |
| $u_b$ | Coriolis displacement | in | cm |
| $u_c$ | drive displacement | in | cm |
| $u_d$ | left mass displacement | in | cm |
| $u_l$ | right mass displacement | in | cm |
| $u_r$ | bending velocity | in/sec | cm/sec |
| $\dot{u}_b$ | Coriolis velocity | in/sec | cm/sec |
| $\dot{u}_c$ | drive velocity | in/sec | cm/sec |
| $\dot{u}_d$ | left mass velocity | in/sec | cm/sec |
| $\dot{u}_l$ | right mass velocity | in/sec | cm/sec |
| $\dot{u}_r$ | bending acceleration | $in/sec^2$ | $cm/sec^2$ |
| $\ddot{u}_b$ | Coriolis acceleration | $in/sec^2$ | $cm/sec^2$ |
| $\ddot{u}_c$ | angular velocity | hz | hz |
| $\omega$ | natural frequency (bending) | hz | hz |
| $\omega_b$ | natural frequency (Coriolis) | hz | hz |
| $\omega_c$ | drive frequency | hz | hz |
| $\omega_d$ | phase angle | radians | radians |
| $\theta$ | phase angle (right mass) | radians | radians |
| $\theta_r$ | phase angle (left mass) | radians | radians |
| $\theta_l$ | phase angle difference | radians | radians |
| $\delta\theta$ | phase angle difference (right mass) | radians | radians |
| $\delta\theta_r$ | phase angle difference (left mass) | radians | radians |
| $\delta\theta_l$ | time | sec | sec |
| $t$ | phase angle difference (undamped) | radians | radians |
| $\delta\theta_o$ | | | |

## Table 1 - continued
## System Parameters and Variables

| Symbol | Description | English Units | SI Units |
|---|---|---|---|
| $t_r$ | time (right mass) | sec | sec |
| $t_l$ | time (left mass) | sec | sec |
| $\delta t$ | time delay | sec | sec |
| $\alpha$ | rotation | radians | radians |
| $r$ | moment arm | in | cm |
| $\dot{\alpha}$ | rotational velocity | radians/sec | radians/sec |
| $\ddot{\alpha}$ | rotational acceleration | radians/sec$^2$ | radians/sec$^2$ |
| $M_e$ | elastic restoring moment | in-lb$_f$ | N-cm |
| $M_v$ | viscous damping moment | in-lb$_f$ | N-cm |
| $I_c$ | moment of inertia | lb$_m$-in$^2$ | kg-cm$^2$ |
| $\phi_c$ | phase angle function | radians | radians |
| $\phi_b$ | bending phase angle function | radians | radians |
| $\phi_c$ | Coriolis phase angle function | radians | radians |
| $h_b$ | bending amplitude | in | cm |
| $H_c$ | Coriolis amplitude | in | cm |
| $\zeta_b$ | bending damping ratio | % | % |
| $\zeta_c$ | Coriolis damping ratio | % | % |
| $k_b$ | bending elastic spring constant | lb$_f$/in | N/cm |
| $k_c$ | Coriolis elastic spring constant | lb$_f$/in | N/cm |
| $\epsilon$ | phase angle lag | radians | radians |
| $\theta_d$ | driver phase angle | radians | radians |
| $\rho$ | fluid density | lb$_m$/ft$^3$ | kg/m$^3$ |
| $P$ | oscillation period | sec | sec |
| $m_T$ | conduit and appendage mass | lb$_m$ | kg |
| $m_F$ | fluid mass | lb$_m$ | kg |
| $V_o$ | conduit volume | cu. ft. | m$^3$ |

The equation of motion for the bending motion due to the driver force is

EP 0 324 019 B1

$$\ddot{u}_b + 2\omega_b \zeta_b \dot{u}_b + \omega_b^2 u_b = \frac{f_b}{m} \sin \omega_d t \quad (18)$$

where

$$\omega_b^2 = \frac{k_b}{m} \quad (19)$$

$$\zeta_b = \frac{c_b}{2\sqrt{(k_b m)}} \quad (20)$$

The steady-state solution for the idealized bending motion of the flow tube is

$$u_b(t) = H_b \sin (\omega_d t - \phi_b) \quad (21)$$

where $H_b$ is the amplitude function and $\phi_b$ is the phase angle function. These functions are given by

$$H_b = \left(\frac{f_b}{k_b}\right) \left(\frac{\omega_b^2}{\sqrt{(\omega_b^2 - \omega_d^2)^2 + (2\omega_d \omega_b \zeta_b)^2}}\right) \quad (22)$$

$$\phi_b = \tan^{-1}\left(\frac{2\omega_b \omega_d \zeta_b}{(\omega_b^2 - \omega_d^2)}\right) \quad (23)$$

By similar means, a second equation of motion is obtained for the case when fluid of constant density flows through the tube at constant speed. Figure 3 shows the geometry of the situation. At time t, the idealized masses have been displaced an amount $u_b(t)$ due to the driver. In addition, the flowing fluid gives rise to a Coriolis force $f_c(t)$ acting on each mass of the form

$$f_c(t) = 2\dot{m}_o \dot{u}_d \sin \omega_d t \quad (24)$$

where $\dot{m}_o$ is the constant mass flow rate, and $\dot{u}_d$ is the amplitude of the driver velocity, which is also assumed constant. Due to the curvature of the flow tube, the Coriolis force on the left mass is 180 degrees out of phase with the Coriolis force acting on the right mass. The net result is that the flowing fluid produces a pure moment causing the rotation $\alpha$ of the masses about the $\underline{e}_2$ axis which is out of the $\underline{e}_1$-$\underline{e}_3$ plane as shown in Figure 3.

Since all displacements are small, it is assumed that the resulting torsional motions induced by the flowing fluid can be superposed on the bending motions by neglecting any coupling between the degrees of freedom. The equation of motion for the uncoupled torsional motions is obtained as follows. An elastic restoring moment $M_e$ is assumed to act on each mass of the form

$$M_e = - rk_b(r\alpha) \quad (25)$$

where $k_b$ is the elastic spring constant for this degree of freedom and r is the distance between the $\underline{e}_2$ axis and the mass point. A viscous damping moment is also assumed of the form

$$M_v = - rc_c(r\dot{\alpha}) \quad (26)$$

where $c_c$ is the viscous damping constant. Then the rotational form of Newton's Second Law of Motion gives for the motion of either mass

$$I_c \ddot{\alpha} = -rk_c(r\alpha) - rc_c(r\dot{\alpha}) + rf_c(t) \quad (27)$$

where $I_c$ is the moment of inertia of one mass about the $\underline{e}_2$ axis, i.e.,

$$L_c = mr^2 \quad (28)$$

From the geometry of Figure 3 the component of displacement in the $\underline{e}_3$ direction due to the rotation $\alpha$ is

$$u_c = r\sin\alpha \quad (29)$$

which for small angles reduces to

$$u_c = r\alpha \quad (30)$$

Substituting eqs.(24), (28) and (30) into eq. (27) and dividing by r produces the equation of motion for the Coriolis

displacements

$$m\ddot{u}_c + c_c\dot{u}_c + k_cu_c = (2\dot{m}_o\dot{u}_d)\sin \omega_dt \quad (31)$$

or in canonical form

$$\ddot{u}_c + 2\omega_c\,\zeta_c\dot{u}_c + \omega_c{}^2u_c = \frac{2\dot{m}_o\dot{u}_d}{m}\sin \omega_dt \quad (32)$$

where the natural frequency $\omega_c$ and critical damping ratio $\zeta_c$ of the Coriolis motions are given by

$$\omega_c{}^2 = \frac{k_c}{m} \quad (33)$$

$$\zeta_c = \frac{c_c}{2\sqrt{(k_cm)}} \quad (34)$$

The solution to the equation of motion for the Coriolis displacements is

$$u_c(t) = H_c \sin (\omega_dt - \phi_c) \quad (35)$$

where the amplitude function $H_c$ and phase angle function $\phi_c$ are given by:

$$\phi_c = \tan^{-1}\left(\frac{2\omega_c\omega_d\,\zeta_c}{(\omega_c{}^2 - \omega_d{}^2)}\right) \qquad (36)$$

$$H_c = \left(\frac{2\dot{m}_o\dot{u}_d}{k_c}\right)\left(\frac{\omega_c{}^2}{\sqrt{(\omega_c{}^2 - \omega_d{}^2)^2 + (2\omega_c\omega_d\,\zeta_c)^2}}\right) \qquad (37)$$

The total motion of the two mass system is composed of the Coriolis motions superimposed on the bending motions as shown in Figure 3. The displacements of the right mass $u_r$ and the left mass $u_1$ are given by

$$u_r = u_b + u_c \quad (38)$$
$$u_l = u_b - u_c \quad (39)$$

This completes the description of the idealized lumped parameter model of the flow tube. Given the parameters of the system

$\omega_b, \zeta_b, k_b$...bending motions

$\omega_c, \zeta_c, k_c$...Coriolis motions

$\omega_d, \dot{u}_d, f_b$...driver parameters

$\dot{m}_o$.........mass flow rate

the complete steady state motion of the flow tube can be calculated.

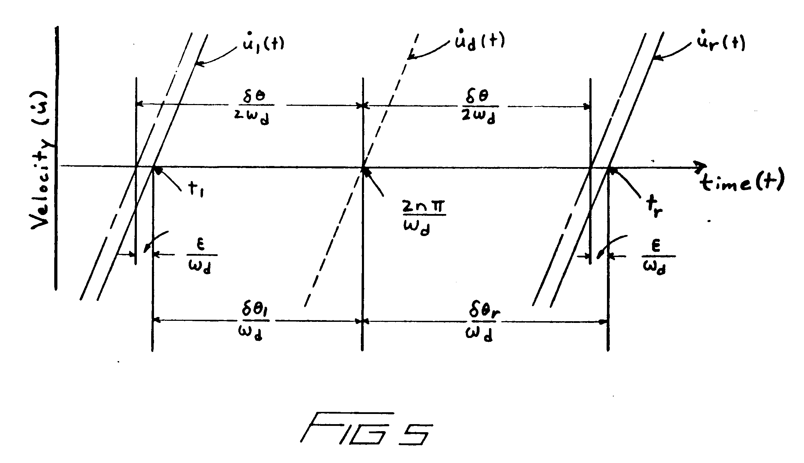

Figure 4 illustrates zero crossings of sine curves generated by velocity transducers, which can be used to derive mass flow rate as explained below. The two solid sinusoids represent the velocities of the two sides of the flow conduit. The broken sinusoid represents the velocity of the driver element.

The analysis above permits the development of various schemes for measuring the steady flow of mass through the flow tube. The fundamental concept is, that by making measurements of the motions of the flow tube, the mass flow rate can be determined. Only velocity measurements will be considered here, but similar schemes based on the use of displacement or acceleration transducers can be developed. Similarly, only schemes based on time delays or phase angle differences will be discussed. Only zero crossings will be used, but it is understood that by similar analysis arbitrary level crossings could be used.

It is assumed that the idealized flow tube in Figure 2 is equipped with velocity transducers such that continuous time measurements are made of the velocity of the right and left masses. Using eqs. (21), (35), (38) and (39), and differentiating with respect to time, yields these velocities:

$$\dot{u}_r(t) = \left[ H_b \cos(\omega_d t - \phi_b) + H_c \cos(\omega_d t - \phi_c) \right] \omega_d \qquad (40)$$

$$\dot{u}_l(t) = \left[ H_b \cos(\omega_d t - \phi_b) - H_c \cos(\omega_d t - \phi_c) \right] \omega_d \qquad (41)$$

Further, assume that the system is driven at the resonance of the bending motions, i.e. set

$$\omega_d = \omega_b \qquad (42)$$

From eqs. (19), (20), (22), and (23) the amplitude function $H_b$ and phase angle $\phi_b$ reduce to

$$H_b = \frac{f_b}{\omega_d c_b} \qquad (43)$$

$$\phi_b = \frac{\pi}{2} \qquad (44)$$

Substituting eqs. (43) and (44) into the velocity equations and using well-known mathematical identities gives

$$\dot{u}_r(t) = \left[ \left( \frac{f_b}{\omega_d c_b} \right) \sin \omega_d t + H_c \cos(\omega_d t - \phi_c) \right] \omega_d \qquad (45)$$

$$\dot{u}_l(t) = \left[ \left( \frac{f_b}{\omega_d c_b} \right) \sin \omega_d t - H_c \cos(\omega_d t - \phi_c) \right] \omega_d \qquad (46)$$

Figure 4 shows a plot of these velocities as functions of time, where it is assumed that $H_c$ is small in comparison to $H_b$, and that $\phi_c$ is a small angle. The two sine waves are offset such that $\dot{u}_l$ crosses zero before $\dot{u}_r$. The times when these zero crossings occur are $t_l$ and $t_r$, and they can be found by setting eqs. (45) and (46) to zero:

$$\left( \frac{f_b}{\omega_d c_b} \right) \sin(\omega_d t_r) + H_c \cos(\omega_d t_r - \phi_c) = 0 \qquad (47)$$

$$\left( \frac{f_b}{\omega_d c_b} \right) \sin(\omega_d t_l) - H_c \cos(\omega_d t_l - \phi_c) = 0 \qquad (48)$$

Of course, if level crossings were used, the right hand side of equations 30 and 31 would be set equal to the level value rather than zero and the analysis would proceed.

At this stage, it is assumed that all the system parameters are known, such that eq.(47) has only the one unknown quantity $t_r$. Similarly eq. (48) has only the one unknown $t_l$. If each of these equations are solved separately, $t_r$ and $t_l$ are obtained, i.e. the time when the velocity of the respective mass crosses the zero level.

There are several methods for solving eqs. (47) and (48). One approach is to make a simple change of variables as follows. The general relationship between phase angle and time is

$$\theta = \omega t \quad (49)$$

where $\theta$ is phase angle in radians, and $\omega$ is an arbitrary angular frequency. For the steady state motions of the flow tube under consideration, all motions occur at the frequency of the driver $\omega_d$. Thus, the proper change of variables for this problem is

$$\theta = \omega_d t \quad (50)$$

The phase angle $\theta$ is measured with respect to time zero, and increases as time increases. The previously defined phase angles $\phi_b$ and $\phi_c$ are of different type in that they are restricted to the interval $(-\pi, \pi)$.

From the sinusoidal driver force, the driver phase has zero crossing at

$$\theta_d = n\pi \quad (51)$$

where n is an integer in the set (0, 1, 2, ...). The even values of n correspond to zero crossings with positive slope, and the odd values of n correspond to zero crossings with negative slope. This is plotted in Figure 4. Now define the difference in phase between the right and left velocity traces as $\delta\theta$, and consider only the zero crossings with positive slope. Then, assuming the symmetry shown in Figure 4, the zero crossings of the two velocity traces occur at

$$\theta_r = 2n\pi + \delta\theta/2 \quad (52)$$
$$\theta_l = 2n\pi - \delta\theta/2 \quad (53)$$

Using eqs. (50), (52) and (53) and well-known mathematical identities, the time equations (47) and (48) are transformed to the following phase angle difference equations:

$$\left(\frac{f_b}{\omega_d \, c_b}\right) \sin(\delta\theta/2) + H_c \cos(\delta\theta/2 - \phi_c) = 0 \qquad (54)$$

$$\left(\frac{f_b}{\omega_d \, c_b}\right) \sin(\delta\theta/2) + H_c \cos(\delta\theta/2 + \phi_c) = 0 \qquad (55)$$

A general solution to the phase angle difference equations (54) and (55) can be obtained. Restated they are

$$\left(\frac{f_b}{\omega_d c_b}\right) \sin(\delta\theta/2) = -H_c \cos(\delta\theta/2 - \phi_c) \qquad (56)$$

$$\left(\frac{f_b}{\omega_d c_b}\right) \sin(\delta\theta/2) = -H_c \cos(\delta\theta/2 + \phi_c) \qquad (57)$$

There are two equations in the one unknown quantity $H_c$. Adding the squares of eqs. (56) and (57) yields

$$2 \left(\frac{f_b}{\omega_d c_b}\right)^2 \sin^2 (\delta\theta/2) =$$

$$H_c^2 [\cos^2 (\delta\theta/2 - \phi_c) + \cos^2 (\delta\theta/2 + \phi_c)] \tag{58}$$

Employing well-known mathematical identities and taking the negative square root yields

$$H_c = -\left(\frac{\sqrt{2}f_b}{c_b}\right) \frac{\sin (\delta\theta/2)}{\omega_d \sqrt{1 + \cos (2\phi_c) \cos (\delta\theta)}} \tag{59}$$

Setting eq. (59) equal to eq.(37) and solving for the mass flow rate yields

$$\dot{m}_o = -\left(\frac{\sqrt{2}f_b}{2c_b\dot{u}_d}\right) k_c \frac{\sqrt{(\omega_c^2 - \omega_d^2)^2 + (2\omega_c \omega_d \zeta_c)^2}}{\omega_c^2} \tag{60}$$

$$\times \frac{\sin (\delta\theta/2)}{\omega_d \sqrt{1 + \cos (2\phi_c) \cos (\delta\theta)}}$$

Equation (60) is the general solution to the phase angle difference equations.

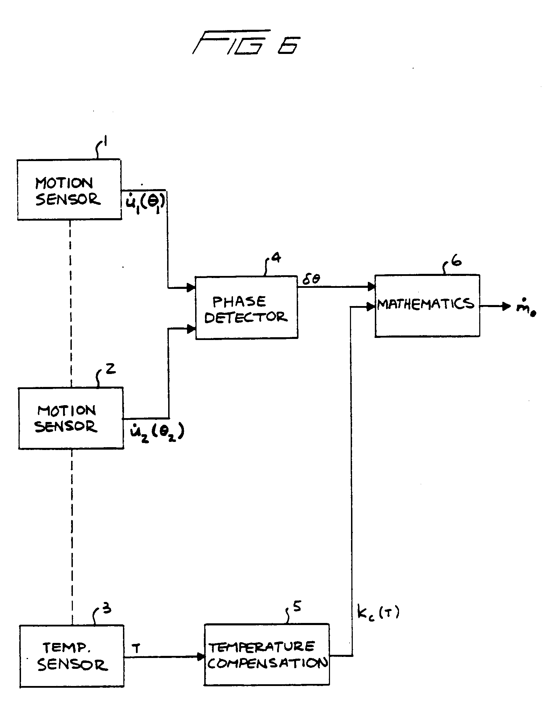

The formula in eq. (60) is the general solution for the prior art formulas discussed previously, all of which are based on an assumption of no asymmetric behavior. Figure 5 is a detailed view of the zero crossings. Instead of the zero crossing times $t_r$ and $t_1$ being symmetric with respect to the driver, both times lag the symmetric position by the same small amount. For the asymmetric case, eqs.(52) and (53) are replaced by

$$\theta_r = 2n\pi + \delta\theta_r \quad (61)$$
$$\theta_1 = 2n\pi - \delta\theta_1 \quad (62)$$

Proceeding as before, eqs. (61) and (62) are substituted into the zero crossing equations (47) and (48), and eq. (50) is used to make the change of variables. These equations are then solved separately for the phase angle difference $\delta\theta_r$ and $\delta\theta_1$:

$$\tan \delta\theta_r = \frac{-H_c \cos \phi_c}{\left[\dfrac{f_b}{\omega_d c_b} + H_c \sin \phi_c\right]} \tag{63}$$

$$\tan \delta\theta_1 = \frac{-H_c \cos \phi_c}{\left[\dfrac{f_b}{\omega_d c_b} - H_c \sin \phi_c\right]} \tag{64}$$

Consider the special case when the Coriolis motions are undamped. The phase angle $\phi_c$ is zero, and eqs. (63) and (64) reduce to the identical expression

16

$$\tan \delta\theta_r = \tan \delta\theta_l = \frac{-H_c}{\left[\dfrac{f_b}{\omega_d \, c_b}\right]} \qquad (65)$$

But from Figure 5 this is just the symmetric case previously discussed, i.e.

$$\delta\theta_r = \delta\theta_l = \frac{\delta\theta^\circ}{2} \quad (66)$$

For non-zero damping, define

$$\delta\theta_r = \frac{\delta\theta^\circ}{2} + \varepsilon \quad (67)$$

$$\delta\theta_l = \frac{\delta\theta^\circ}{2} - \varepsilon \quad (68)$$

where $\varepsilon$ is the non-zero lag shown in Figure 5. Then substituting eq.(65) into eqs.(63) and (64), and employing well-known mathematical identities yields the following expressions for the zero crossing asymmetry:

$$\tan \delta\theta_r = \frac{\tan (\delta\theta^\circ/2) \cos \phi_c}{[1 - \tan(\delta\theta^\circ/2) \sin \phi_c]} \quad (69)$$

$$\tan \delta\theta_l = \frac{\tan (\delta\theta^\circ/2) \cos \phi_c}{[1 + \tan(\delta\theta^\circ/2) \sin \phi_c]} \quad (70)$$

As is readily apparent, eq. 69 can be solved for $\tan \dfrac{\delta\theta^\circ}{2}$ to yield

$$\tan \frac{\delta\theta^\circ}{2} = \frac{\tan \delta\theta_r}{\cos \phi_c + \tan \delta\theta_r \sin \phi_c} \quad (69a)$$

Similarly, eq. 70 can be solved for tan to yield

$$\tan \frac{\delta\theta^\circ}{2} = \frac{\tan \delta\theta_l}{\cos \phi_c - \tan \delta\theta_l \sin \phi_c} \quad (70a)$$

If the total phase angle difference $\delta\theta^\circ$ is measured, then the right hand side of eq.(69) is known, and it can be set equal to the right hand side of eq.(63). This results in a simple expression for the amplitude function $H_c$, which again can be used in eq.(37). Solving for the mass flow rate yields

$$\dot{m}_o = -\left(\frac{f_b}{2c_b \, \dot{u}_d}\right) k_c \frac{\sqrt{(\omega_c^2 - \omega_d^2)^2 + (2\omega_c \, \omega_d \, \zeta_c)^2}}{\omega_c^2} \qquad (71)$$

$$\times \frac{\tan (\overset{o}{\delta\theta}/2)}{\omega_d}$$

This is the correct solution to the zero crossing equations. The same manipulations on eqs. (64) and (70) yield identical results. It should be noted that had level crossing equations been employed, the same result would be obtained as for zero crossing equations.

For the case of non-metallic conduits or for the case of damping due to fluid flow, such as that due to air entrained in liquid, it can be demonstrated by one skilled in the art that equations (69-71) are modified by a $\cos\phi_c$ term as follows:

$$\tan \delta\theta_r = \frac{\tan (\delta\theta^\circ/2) \cos^2\phi_c}{[1 - \tan(\delta\theta^\circ/2) \sin \phi_c \cos \phi_c]} \quad (72)$$

$$\tan \delta\theta_l = \frac{\tan (\delta\theta^\circ/2) \cos^2\phi_c}{[1 + \tan (\delta\theta^\circ/2) \sin \phi_c \cos \phi_c]} \quad (73)$$

$$\dot{m}_0 = -\left(\frac{f_b}{2c_b \dot{u}_d}\right) k_c \frac{\sqrt{(\omega_c^2 - \omega_d^2)^2 + (2\omega_c \omega_d \zeta_c)^2}}{\omega_c^2}$$

$$\times \frac{\tan (\delta\theta^o/2)}{\omega_d} \cos \phi_c \qquad (74)$$

For all cases wherein damping is unimportant, $\cos\phi_c$ is essentially unity and hence does not need to be accounted for. For materials, such as, but not limited to, non-metallic tubes, wherein damping is important, or when there is two phase flow which results in damping, account should be taken of $\cos \phi_c$.

The derivation of Equations 72-74 is as follows. For zero damping, $\zeta_c$ and $\phi_c$ are zero. Thus, the amplitude function (eq. 37) becomes

$$H_c^o = \left(\frac{2\dot{m}_0 \dot{u}_d}{k_c}\right) \frac{\omega_c^2}{(\omega_c^2 - \omega_d^2)} . \qquad (75)$$

where the zero superscript indicates zero damping. From equations (63) and (64)

$$\tan \delta\theta_r = \tan \delta\theta_l = \frac{-H_c^o}{\left(\frac{f_b}{\omega_d c_b}\right)} \qquad (76)$$

i.e., there is no asymmetry and

$$\delta\theta_r = \delta\theta_l = \tfrac{1}{2}\delta\theta^o \qquad (77)$$

Thus eq. (76) can be re-written

$$\left(\frac{f_b}{\omega_d c_b}\right) = \frac{-H_c^o}{\tan \frac{\delta\theta^o}{2}} \qquad (78)$$

For a lightly damped system with $\omega_d$ not near $\omega_c$, the frequency response amplitude function has little dependence on $\zeta_c$. Thus, the following approximation is made:

$$H_c \simeq H_c^o \qquad (79)$$

and eq. (78) becomes

$$\left(\frac{f_b}{\omega_d c_b}\right) = \frac{-H_c}{\tan \frac{\delta\theta^o}{2}} \qquad (80)$$

Substituting eq. (80) into eq. (63) with some manipulations produces eq. (69):

$$\tan \delta\theta_r = \frac{\tan \frac{\delta\theta^o}{2} \cos \varphi_c}{[1 - \tan \frac{\delta\theta}{2}^o \sin \varphi_c]} \qquad (69)$$

The same approximation is used to derive eq. (70).

Now suppose the flow meter is not lightly damped such that eq. (79) is not valid. Equation (37) can be re-

written

$$\frac{1}{H_c^2} = \left[ \frac{1}{(H_c^o)^2} + \left(\frac{k_c}{2\dot{m}_o \dot{u}_d}\right)^2 \left(\frac{2\omega_c \omega_d J_e}{\omega_c^2}\right)^2 \right] \qquad (81)$$

where use has been made of eq. (78). Multiplying eq. (81) by $(H_c^o)^2$ and simplifying yields

$$\left(\frac{H_c^o}{H_c}\right)^2 = 1 + \left[\frac{2\omega_c \omega_d J_e}{(\omega_c^2 - \omega_d^2)^2}\right]^2 \qquad (82)$$

But making use of eq. (36), eq. (82) becomes

$$(\frac{H_c^o}{H_c})^2 = 1 + \tan^2\varphi_c \qquad (83)$$

or

$$\frac{H_c^o}{H_c} = \frac{1}{\cos \varphi_c} \qquad (84)$$

Substituting eq. (84) into equation (78) yields

$$\frac{f_b}{\omega_d c_b} = \frac{-H_c}{\tan \frac{\delta\theta^o}{2} \cos \varphi_c} \qquad (85)$$

Finally, substituting eq. (85) into eq. (63) and simplifying yields

$$\tan \delta\theta_r = \frac{\tan \frac{\delta\theta^o}{2} \cos^2 \varphi_c}{[1 - \tan \frac{\delta\theta^o}{2} \cos \varphi_c \sin \varphi_c]} \qquad (72)$$

which is eq. (72). Equation (73) is similarly derived by substituting eq. (85) into eq. (64).

To derive eq. (74), set eq. (63) equal to eq. (72) and solve for the frequency response amplitude function. The result is

$$H_c = (\frac{-f_b}{\omega_d c_b}) \tan \frac{\delta\theta^o}{2} \cos \varphi_c \qquad (86)$$

Now set eq. (86) equal to eq. (37) and solve for the mass flow rate $\dot{m}_o$. This yields eq. (74).

Some additional mass flow measurement schemes can be developed from this analysis. The phase angle difference equation (54) can be solved for $H_c$:

$$H_c = (\frac{-f_b}{\omega_d c_b}) \frac{\sin \delta\theta_r}{\cos (\delta\theta_r - \varphi_c)} \qquad (87)$$

Then setting eq. (87) equal to eq. (37) and solving for the mass flow rate yields

$$\dot{m}_o = \left(\frac{-f_b}{2 c_b \dot{u}_d}\right) k_c \left\{ \frac{[(\omega_c^2 - \omega_d^2)^2 + (2\omega_c \omega_d J_e)^2]^{1/2}}{\omega_c^2} \right\} \frac{1}{\omega_d} \frac{\sin \delta\theta_r}{\cos (\delta\theta_r - \varphi_c)}$$

$$(88)$$

The same equation can be derived from eq. (55), but the sign of $\delta\theta_l$ must be taken into account. Equation (88) can be used to determine mass flow rate by direct measurement of either $\delta\theta_r$ or $\delta\theta_l$.

An asymmetric correction scheme can be derived from the previous analysis. Equations (72) can be solved for $\tan \frac{\delta\theta^o}{2}$, i.e.,

$$\tan \frac{\delta\theta^\circ}{2} = \frac{\tan \delta\theta_r}{[\cos^2\varphi_c + \tan \delta\theta_r \cos \varphi_c \sin \varphi_c]} \quad (89)$$

Similarly from eq. (73)

$$\tan \frac{\delta\theta^\circ}{2} = \frac{\tan \delta\theta_1}{[\cos^2\varphi_c - \tan \delta\theta_1 \sin \varphi_c \cos_\chi]} \quad (90)$$

Either eq. (89) or eq. (90) can be used to correct for asymmetry, when the flow meter is not lightly damped. To determine the mass flow rate, the value of $\delta\theta^\circ$ given by these equation is used in eq. (74).

Use of dual sensors requires some additional analysis. The trigonometric identity

$$\tan (x + y) = \frac{\tan x + \tan y}{[1 - \tan x \tan y]} \quad (91)$$

can be used to combine eqs. (72) and (73). After simplification the result is

$$\tan (\delta\theta_r + \delta\theta_1) = \frac{2 \tan \frac{\delta\theta^\circ}{2} \cos^2 \varphi_c}{[1 - \tan^2 \frac{\delta\theta^\circ}{2} \cos^2 \varphi_c]} \quad (92)$$

Equation (92) can be solved for $\frac{\delta\theta^\circ}{2}$. Let

$$z = \tan (\frac{\delta\theta^\circ}{2}) \quad (93)$$

Equation (93) can be substituted into eq. (92) and expanded to yield

$$\tan (\delta\theta_r + \delta\theta_1) z^2 + 2z - \tan (\delta\theta_r + \delta\theta_1) \sec^2\varphi_c = 0 \quad (94)$$

Using the quadratic formula and taking the positive root gives

$$\tan (\frac{\delta\theta^\circ}{2}) = \frac{[1 + \tan^2(\delta\theta_r + \delta\theta_1) \sec^2\varphi_c]^{1/2} - 1}{\tan (\delta\theta_r + \delta\theta_1)} \quad (95)$$

This is the dual sensor asymmetric compensation scheme for non-lightly damped flow meters. The value of $\frac{\delta\theta^\circ}{2}$ resulting from eq. (95) is used in eq. (74).

### C. Embodiments of Invention

Several embodiments of mass flow meters which measure and process motion sensor signals are disclosed which provide more accurate determination of mass flow rates in Coriolis mass flow meters than have heretofore been achieved. It is envisioned that the signal processing elements of each of the embodiments may be incorporated into a microchip or other integrated circuit device. Alternatively, the signal processing portions of each embodiment may be incorporated into discrete elements which are connected to form a signal processing system.

Three embodiments disclosed herein relate to detecting motion sensor signals and processing such signals according to equation 71:

$$\dot{m}_o = - \left( \frac{f_b}{2c_b \dot{u}_d} \right) k_c \frac{\sqrt{(\omega_c^2 - \omega_d^2)^2 + (2\omega_c \omega_d \zeta_c)^2}}{\omega_c^2} \quad (71)$$

$$\times \frac{\tan (\delta\dot{\theta}/2)}{\omega_d}$$

The terms of the equation can be grouped as follows:

$\dot{m}_o$ is mass flow rate

$$K_1 = -\left(\frac{f_b}{2c_b \dot{u}_d}\right)$$

where

$K_1$ represents a group of calibration constants

$f_b$ is the force due to the driver acting on half of the flow tube.

$c_b$ is the combined damping constant for the flow tube for bending motions

$\dot{u}_d$ is the driver velocity

$c_b \dot{u}_d$ can be recast as a viscous damping force $f_o$ resisting oscillations of the flow tube

Therefore

$$K_1 = -\left(\frac{f_b}{2f_o}\right)$$

where the respective forces can be measured by techniques known to one skilled in the art,

$k_c$ is the elastic spring constant of the flow tube which interacts against Coriolis forces. For known constant temperature operation, this is a constant and would be a second calibration constant $K_2$. For unknown or varying temperature operation, this parameter must be temperature-compensated.

$\omega_d$ is the frequency at which the flow tube is driven to oscillate.

$$\frac{\sqrt{(\omega_c^2 - \omega_d^2)^2 + (2\omega_c \omega_d \zeta_c)^2}}{\omega_c^2}$$

Is a frequency response function, where

$\omega_d$ is the drive frequency, above;

$\omega_c$ is the natural frequency of the flow tube about the axis where the Coriolis force acts;

$$\zeta_c = \left(\frac{c_c}{2\sqrt{k_c m}}\right)$$

is the damping ratio of the flow tube about the axis where the Coriolis force acts and can be determined from techniques known to those skilled in the art;

$c_c$ is the combined damping constant for motion of the flow tube about the axis where the Coriolis force acts, and can be determined by dividing the viscous damping force acting about the Coriolis axis by the velocity of the flow tube about the same axis,

$k_c$ is the spring constant above,

$m$ is the mass of the flow tube, flow tube appendages, and the fluid filling the tube whose flow is to be measured.

$\tan(\delta\theta^\circ/2)$ is a half-angle tangent function, where

$\delta\theta^\circ$ is the phase angle difference between the velocities measured by two motion sensors located essentially equidistant from the midpoint of the flow tube.

The result of this equation is that mass flow rate can be determined by determining the phase angle difference of motion signals from two locations on a flow tube, measuring the drive frequency of the flow tube, and compensating for temperature, as needed. The advantages of this equation, which is employed in the following embodiments, are that it allows for greater phase angles and increased accuracy at full flow rates. Greater phase angles will improve the signal-to-noise ration in noisy environments, such as gas flow environments.

An embodiment which accounts for asymmetry and viscous damping employs equation (88):

$$\dot{m}_o = -\left(\frac{f_b}{2c_b \dot{u}_d}\right) k_c \frac{\sqrt{(\omega_c^2 - \omega_d^2)^2 + (2\omega_c \omega_d \zeta_c)^2}}{\omega_c^2} \tag{88}$$

$$\times \frac{1}{\omega_d} \frac{\sin \delta\theta_1}{\cos(\delta\theta_1 - \phi_c)}$$

The sign for this equation is as shown if $\delta\theta_1 > 0$. If $\delta\theta_1 < 0$, then the sign is changed. The symbols used in the above equation are the same as discussed for equation 71 with the exception that

$$\frac{\sin \delta\theta_1}{\cos(\delta\theta_1 - \phi_c)}$$

is the trigonometric function which replaces the half-angle tangent function of equation (71) and $\phi_c$ is the Coriolis phase angle function.

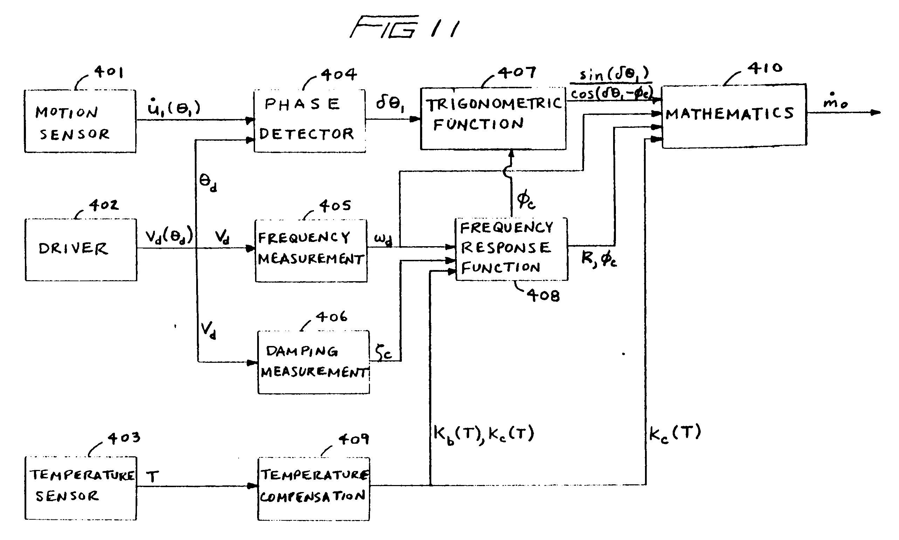

The embodiment employing this equation is shown in Figure 11.

Another embodiment which accounts for both asymmetry and viscous damping employs equation (74):

$$\dot{m}_o = -\left(\frac{f_b}{2c_b \dot{u}_d}\right) k_c \frac{\sqrt{(\omega_c^2 - \omega_d^2)^2 + (2\omega_c \omega_d \zeta_c)^2}}{\omega_c^2} \tag{74}$$

$$\times \frac{\tan(\delta\theta^o/2)}{\omega_d} \cos \phi_c$$

where the symbols are as before in equation 71, but where $\phi_c$ is the Coriolis phase angle function and $\tan(\delta\theta^o/2)$ is the half-angle tangent function for undamped oscillations given by equation (89):

$$\tan \frac{\delta\theta^o}{2} = \frac{\tan \delta\theta_r}{[\cos^2\phi_c \pm \tan \delta\theta_r \cos \phi_c \sin \phi_c]} \tag{89}$$

with the positive sign in the denominator being used for phase lag and negative for phase lead.

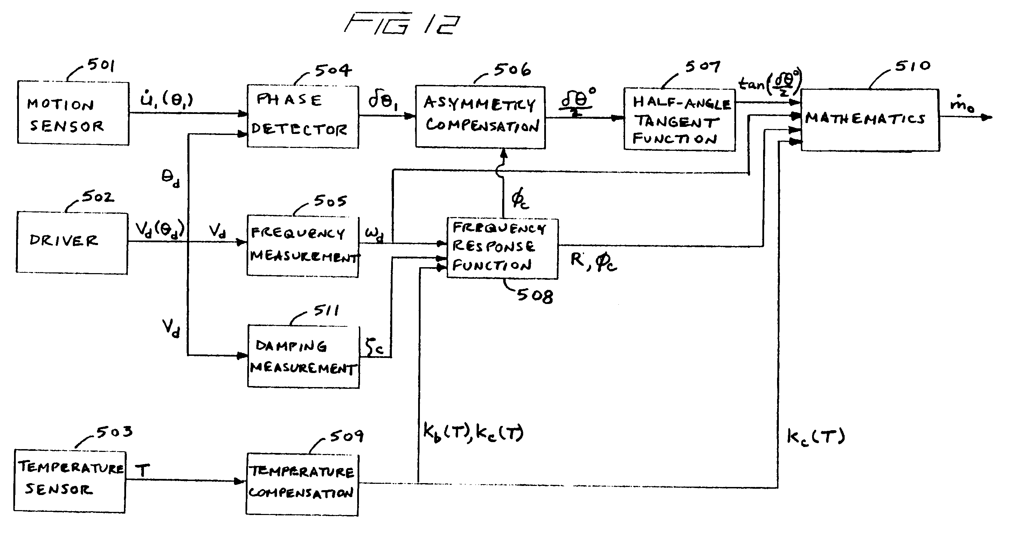

The embodiment employing this approach is shown in Figure 12.

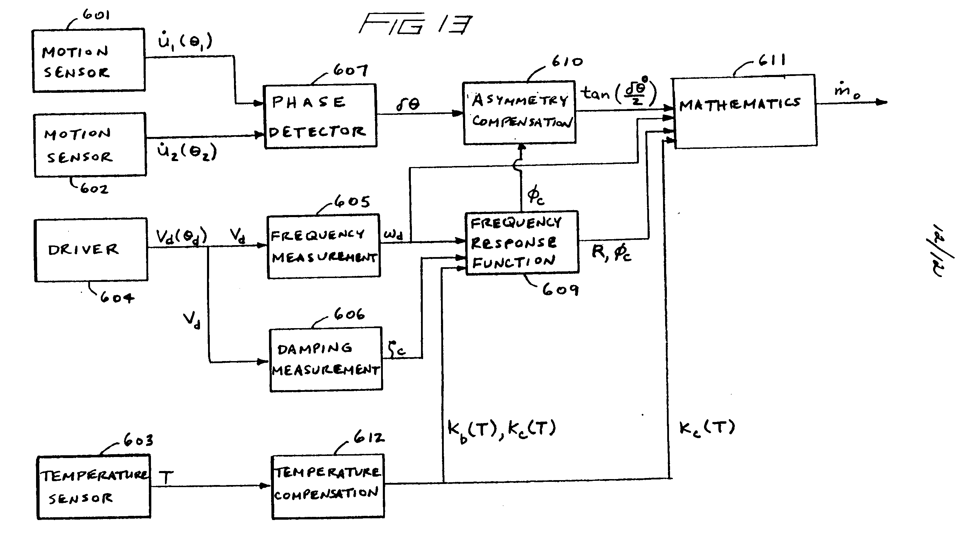

A final embodiment, shown in Figure 13, also employs the signal combination approach of equation (74). This embodiment accounts for asymmetry and viscous damping and employs the signals from two motion sensors. The half-angle tangent function that is employed uses equation (95):

$$\tan\left(\frac{\delta\theta^o}{2}\right) = \frac{[1 + \tan^2(\delta\theta_r + \delta\theta_1) \sec^2\phi_c]^{1/2} - 1}{\tan(\delta\theta_r + \delta\theta_1)} \tag{95}$$

The symbols are the same as described above.

The mass flow rate equation (71) permits a compensation scheme for the changes in the resonant frequency of oscillation and the Coriolis natural frequency which result from changes in density of the fluid flowing through the conduit. In the embodiments which follow, temperature-compensated spring constants about the oscillation axis and the transverse Coriolis axis are obtained by measuring the flow conduit temperature. As one skilled in the art will recognize, the density of the fluid in the conduit can be determined according to the formula:

$$\rho = \frac{k_b(T) P^2}{K_A} - K_B \tag{96}$$

where

$\rho$ is density

$P = \dfrac{2\pi}{\omega_d}$ is the period of oscillation

$k_b(T)$ is the temperature - compensated spring constant about the oscillation axis

$K_A$ and $K_B$ are constants

A derivation and discussion of this formula can be found in U.S. Patent No. 4,491,009. Specific density meter circuitry embodiments employing this technique are found in U.S. patent application serial numbers 916,973 and 916,780, both filed October 9, 1986.

Since the total mass of the fluid-filled conduit is given by

$$m = m_T + m_F \quad (97)$$

where

$m$ = total mass

$m_T$ = tube mass and appendages

$m_F$ = fluid mass

and

$$m_F = \rho V_o \quad (98)$$

where $V_o$ is the tube volume,

then

$$m = m_T + \rho V_o \quad (99)$$

Therefore, the Coriolis natural frequency is given by

$$\omega_c = \sqrt{\frac{k_c(T)}{m}} = \sqrt{\frac{k_c(T)}{m_T + \rho V_o}} \quad (100)$$

The Coriolis natural frequency can then be determined by employing the temperature-compensated spring constant about the Coriolis axis transverse to the oscillation axis, the known tube mass and volume and the measured density.

Equation (37) demonstrates how the amplitude of the Coriolis motions $H_c$, depends on the frequency response function. The frequency response function contains terms which account for the density of the process fluid. If the density changes, both the resonant frequency of oscillation and the Coriolis natural frequency change. The feedback system of the meter works to keep the system at resonance, i.e. the drive frequency moves to the new bending frequency. However, unless the ratio of the new frequencies is unchanged, the amplitude of the Coriolis motions will change without any change in the mass flow rate. This causes an error in the measured mass flow rate. The embodiments herein contain a compensation scheme for this problem. The drive frequency is continuously measured. From the drive frequency it is possible to determine the density of the fluid in the conduit. Equation (100) above is used to correct the Coriolis frequency. Then according to eq. (71) with these frequencies plus the damping ratio of the Coriolis motions, the frequency response effect is cancelled. This correction is carried out in frequency response function logic elements in the embodiments disclosed herein.

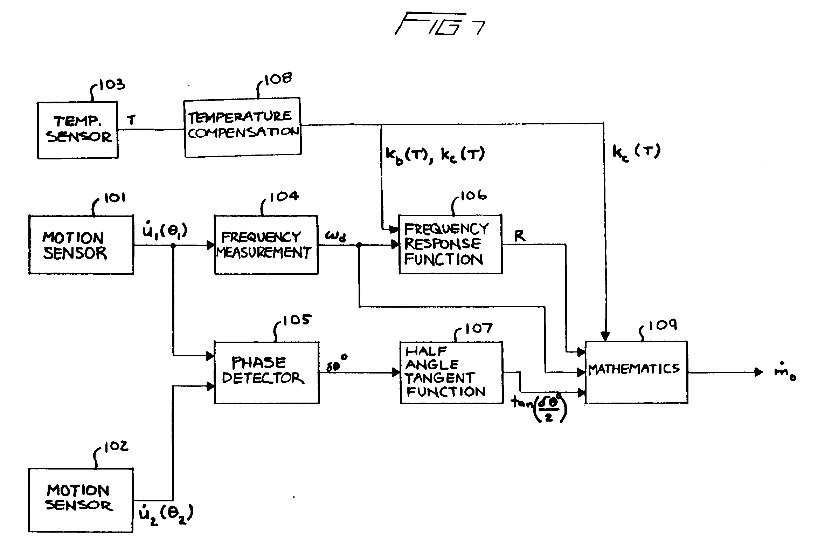

An existing linearized embodiment of the signal processing logic for a mass flow meter is depicted in a block diagram in Figure 6. In this embodiment, the signals of two motion sensors are employed to determine a phase angle difference which is processed further with calibration constants to produce a mass flow measurement. Motion sensors 1 and 2 are mounted to monitor motion of the flow conduit at locations which are essentially equidistant from the midpoint of the flow conduit, which is assumed symmetrical in shape. In this embodiment, the motion sensors are assumed to be velocity sensors which provide signals $\dot{u}_1$ and $\dot{u}_2$, which have associated phase angles $\theta_1$ and $\theta_2$, respectively, but could also be displacement or acceleration sensors. The signals from motion sensors 1 and 2 are each input to phase detector element 4. Phase detector element 4 performs a comparison of the signals from motion sensors 1 and 2 and processes the two signals to produce a phase angle difference measurement between the two signals. Temperature sensor 3 measures the temperature of the flow conduit. Its signal is processed by temperature-compensation logic element 5. The processed temperature signal provides a temperature-compensated elastic spring constant $k_c(T)$ for the degree of freedom corresponding to the Coriolis force. The phase difference measurement and temperature-compensated spring constant are then further processed by mathematics logic element 6, where they are combined with calibration constants according to the formula

$$\dot{m}_o = K_1 k_c \frac{\delta\theta}{2\omega_d} \quad (101)$$

As one skilled in the art will recognize, this linear approach is limited by the inherent nonlinear relationship between mass flow rate and phase angle.

In the first, second, and third embodiments disclosed below, damping is either zero (undamped), or damping is very slight. In such a case, the damping ratio, $\zeta_c$, is assumed a constant, based on characteristics of the

EP 0 324 019 B1

flow conduits. The damping ratio is measured beforehand for the flow meters and a constant is employed based on that predetermined value.

Figure 7 depicts a first preferred embodiment of the signal processing logic for a mass flow meter which includes two motion sensors 101 and 102 positioned essentially equidistant from the center of the flow conduit to monitor the motion of two sides of the oscillating flow conduit. One of the motion sensor signals, here shown as a velocity signal from sensor 101, is input to frequency measurement element 104 to determine the frequency at which the oscillating flow conduit is driven. This drive frequency is input to frequency response function element 106. The drive frequency is also input to mathematics logic element 109 for further processing. Temperature sensor 103 is employed to provide a temperature of the oscillating flow conduit. This temperature measurement is input to temperature-compensation logic element 108, which processes the signal to produce two temperature-compensated spring constant signals. One spring constant signal $k_b(T)$, is for the oscillation degree of freedom. The other, $k_c(T)$, is for the Coriolis degree of freedom. Both temperature-compensated spring constant signals are input to frequency response function logic element 106, which combines these signals with the drive frequency to determine a frequency response function which accounts for any change in fluid density. The Coriolis spring constant is also input to mathematics logic element 109. The signals from each of the motion sensors $\dot{u}_1$ and $\dot{u}_2$, which have associated respective phase angles $\theta_1$ and $\theta_2$, are input to phase detector element 105 which determines the phase angle difference between the two signals. The phase angle difference is then processed by half-angle tangent function logic element 107. The result of this processing is input to mathematics logic element 109 for further processing. The measured drive frequency, processed frequency response function, processed half-angle tangent function and temperature-compensated Coriolis spring constant are combined with calibration constants in mathematics logic element 109 according to the formula of equation (71) to produce the mass flow rate as an output. As one skilled in the art will recognize, this embodiment takes into account inherent nonlinear effects in measuring mass flow rates, which are not accounted for in the existing linear embodiments. Such inherent nonlinear effects are reflected in the relationship between mass flow rate and phase angle in equation (71) and are embodied in the system of Figure 7.

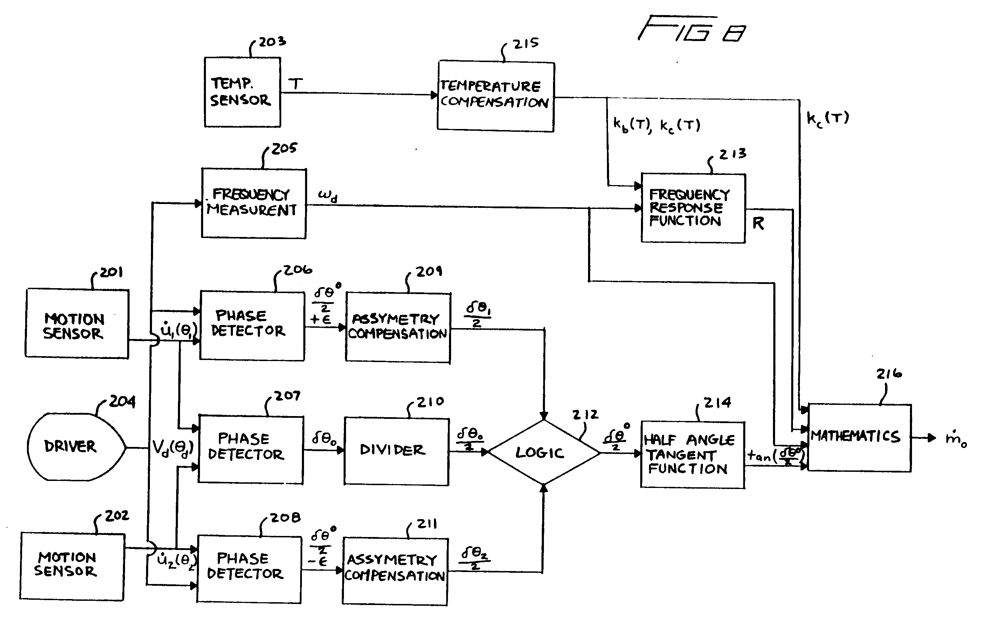

A second preferred embodiment of the signal processing logic for a mass flow meter, illustrated in Figure 8, also processes velocity signals $\dot{u}_1$ and $\dot{u}_2$, having respective associated phase angles $\theta_1$ and $\theta_2$, from two motion sensors 201 and 202, again positioned essentially equidistant from the midpoint of the flow conduits. The voltage signal $V_d$, having associated phase angle $\theta_d$, controlling driver 204 is sensed and is input to frequency measurement logic element 205. The frequency measurement logic element 205 processes the driver signal and provides as output the driver frequency. This output signal is input both to mathematics logic element 216 and to a frequency response function logic element 213. Temperature sensor 203 is employed to provide a temperature of the oscillating flow conduit. This temperature measurement is input to temperature-compensation logic element 215, which processes the signal to produce two temperature-compensated spring constant signals. One spring constant signal, $k_b(T)$, is for the oscillation degree of freedom. The other, $k_c(T)$, is for the Coriolis degree of freedom. Both temperature-compensated spring constant signals are input to frequency response function logic element 213, which combines these signals with the drive frequency to determine a frequency response function which accounts for any change in fluid density. The Coriolis spring constant is also input to mathematics logic element 216.

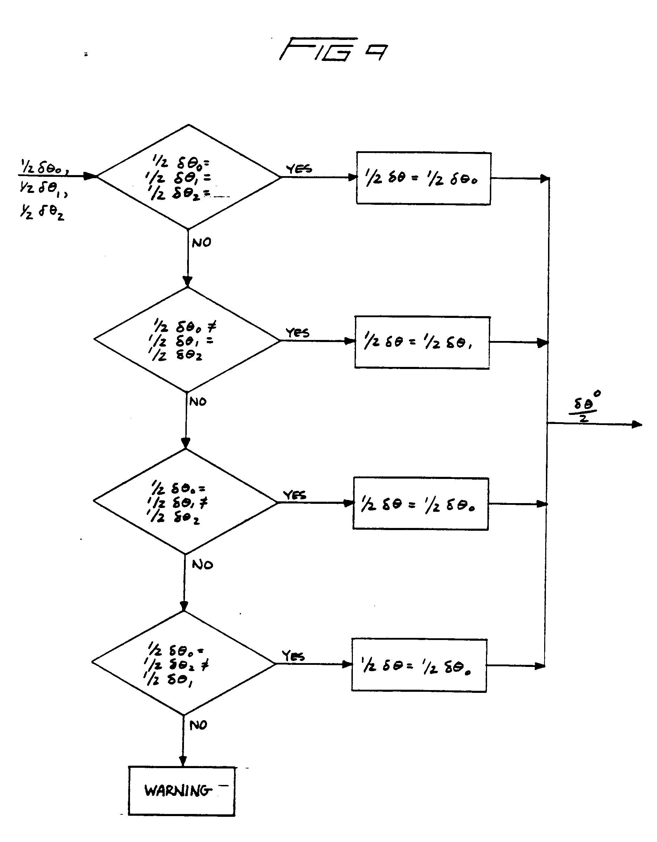

The signal from motion sensor 201 is input to phase detector element 206 along with the signal from driver 204. Phase detector element 206 compares the two signals and produces a phase angle difference measurement between the two signals. This phase angle difference is then input to asymmetry compensation logic element 209 which processes the signal to produce an asymmetry-compensated phase angle difference between motion sensor 201 and driver 204. Similarly, the signals of motion sensor 202 and driver 204 are input to phase detector element 208 where they are processed to produce a phase angle difference, which is in turn processed by asymmetry compensation logic element 211 to produce an asymmetry-compensated phase angle difference between motion sensor 202 and driver 204. The two motion sensor 201 and 202 signals are also processed by phase detector element 207 to produce a phase angle difference measurement, which is then input to divider element 210 where the phase angle difference signal is divided by 2. The three signals from asymmetry compensation logic elements 209 and 211 and divider element 210, which are each half-angle measurements, are then input to half-angle logic element 212 where they are compared according to a polling scheme, shown in Figure 9. The purpose of the polling scheme is to determine if there is a zero fluctuation of the flow conduit, which would be indicative of unbalanced operation.

A half-angle difference is output by half-angle logic element 212, which is then input to half-angle tangent function logic element 214, which processes the signal to produce a half-angle tangent function signal. The measured drive frequency, processed frequency response function, processed half-angle tangent function, and temperature-compensated Coriolis spring constant are combined with calibration constants in mathematics logic element 216. The output signal of mathematics logic element 216 is the mass flow rate, also according to

24

the formula of equation (71). This embodiment has several advantages. It takes into account both the nonlinearities accounted for in the previous embodiment and asymmetries of the zero-crossings of the motion sensor signals. In addition, logic element 212 provides a warning when the device experiences unbalanced operation such as might be caused by ambient vibrations.

This second embodiment offers yet another advantage in determining the proper operation of a mass flow meter measuring the asymmetry, $\varepsilon$, of motion signals versus the driver signal of two motion sensors located essentially equidistant from the driver, which should result in the same value of $\varepsilon$. If the values are not the same, then there is a problem with either the sensors or the conduit and a warning signal can be provided.

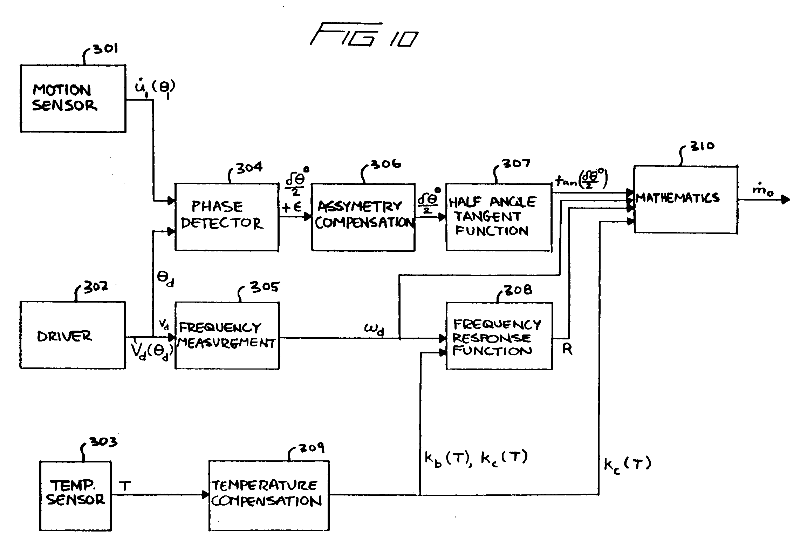

A third preferred embodiment of the signal processing logic for a mass flow meter, illustrated in Figure 10 processes the signals from motion sensor 301, driver 302 and temperature sensor 303 to produce mass flow rate. The voltage signal $V_d$, having associated phase angle $\theta_d$, controlling driver 302 is input to a frequency measurement element 305 which processes the signal and outputs a driver frequency. Alternatively, a driver motion sensor can be used and such motion signal be converted to a frequency signal. This driver frequency output is input to mathematics logic element 310 and to a frequency response function logic element 308. Temperature sensor 303 is employed to provide a temperature of the oscillating flow conduit. This temperature measurement is input to temperature-compensation logic element 309, which processes the signal to produce two temperature-compensated spring constant signals. One spring constant signal, $k_b(T)$, is for the oscillation degree of freedom. The other, $k_c(T)$, is for the Coriolis degree of freedom. Both temperature-compensated spring constant signals are input to frequency response function element 308, which combines there signals. The driver 302 signal is also input to phase detector element 304, which compares this signal with the motion signal $\dot{u}_1$, having associated phase angle $\theta_1$, from the flow conduit motion sensor 301. The output from phase detector element 304 is then input to asymmetry compensation logic element 306. The resulting processed signal is input to a half-angle tangent function logic element 307. The outputs of the half-angle tangent function logic element 307, the frequency response function logic element 308 and the temperature-compensated spring constant are combined with calibration constants in mathematics logic element 310. The resulting output of the processed signals from the driver and flow conduit motion sensor is the mass flow rate, according to the formula of equation (71). This embodiment takes account of both nonlinearity and asymmetry, as in the previous embodiment, but has the further advantage of requiring only one motion sensor signal, in addition to the driver signal.

In the fourth, fifth and sixth embodiments which follow, a damping measurement is employed. It is contemplated that several techniques can be used for making damping measurements. For many applications the damping is constant, and very accurate modal analysis techniques can be employed. For example, the Modal 3.0 software produced by Structural Measurement Systems, Inc. of San Jose, California has been used to measure the damping ratios of mass flow meters.

When the damping is not constant, a near continuous signal must be supplied. One technique is to monitor the power delivered by the drive system. This quantity is directly proportional to the damping in the system. Small changes in the drive frequency could also be used to make damping measurements. Another approach is to use standard decay techniques, such as described in the "Shock and Vibration Handbook", second edition, 1976, published by McGraw Hill Book Company. The measurement could be made on an intermittent basis so as not to interfere with the mass flow measurement.

A fourth preferred embodiment of the signal processing logic for a mass flow meter, illustrated in Figure 11 processes the signals from motion sensor 401, driver 402 and temperature sensor 403 to produce mass flow rate. The voltage signal $V_d$, having associated phase angle $\theta_d$, controlling driver 402 is input to a frequency measurement element 405 which processes the signal and outputs a driver frequency. Alternatively, a driver motion sensor can be used and such motion signal be converted to a frequency signal. This driver frequency output is input to mathematics logic element 410 and to a frequency response function logic element 408. Temperature sensor 403 is employed to provide a temperature of the oscillating flow conduit. This temperature measurement is input to temperature-compensation logic element 409, which processes the signal to produce two temperature-compensated spring constant signals. One spring constant signal, $k_b(T)$, is for the oscillation degree of freedom. The other, $k_c(T)$, is for the Coriolis degree of freedom. The Coriolis spring constant $k_c(T)$ is also input to mathematics logic element 410. The driver 402 signal is also input to damping measurement element 406. The output from damping measurement element 406 is then input to the frequency response element 408. Both temperature-compensated spring constant signals are input to frequency response logic element 408, which combines these signals with the driver frequency and damping measurement to determine a frequency response function which accounts for any change in fluid density. Frequency response element 408 supplies a Coriolis phase angle function $\phi_c$ to trigonometric function element 407 and a frequency response function to mathematics logic element 410. The driver 402 signal is also input to phase detector element 404, which compares this signal with the motion signal $\dot{u}_1$, having associated phase angle $\theta_1$, from the flow conduit motion sensor 401. The output from phase detector element 404 is then input to a trigonometric function logic element 407. The outputs of the trigonometric function logic element 407, the frequency response function logic element 408 and the temperature-compensated spring constant are combined with calibration constants in mathematics logic element 410. The resulting output of the processed signals from the driver and flow conduit motion sensor is the mass flow rate, according to the formula of equation (88). This embodiment takes account of both nonlinearity and viscous damping as in the previous embodiment and has the advantage of requiring only one motion sensor signal, in addition to the driver signal.

A fifth preferred embodiment of the signal processing logic for a mass flow meter, illustrated in Figure 12 processes the signals from motion sensor 501, driver 502 and temperature sensor 503 to produce mass flow rate according to equation (74). The voltage signal $V_d$, having associated phase angle $\theta_d$, controlling driver 502 is input to a frequency measurement element 505 which processes the signal and outputs a driver frequency $\omega_d$. Alternatively, a driver motion sensor can be used and such motion signal be converted to a frequency signal. This driver frequency output is input to mathematics logic element 510 and to a frequency response function logic element 508. Temperature sensor 503 is employed to provide a temperature of the oscillating flow conduit. This temperature measurement is input to temperature-compensation logic element 509, which processes the signal to produce two temperature-compensated spring constant signals. One spring constant signal, $k_b(T)$, is for the oscillation degree of freedom. The other $k_c(T)$, is for the Coriolis degree of freedom. The driver voltage signal $V_d$ is also input to a damping measurement element 511. The output of the damping measurement element 511 is fed to the frequency response function element 508. Both temperature-compensated spring constant signals are input to frequency response logic element 508, which combines these signals with the driver frequency and damping measurement to determine a frequency response function which accounts for any change in fluid density. Frequency response function element 508 generates Coriolis phase angle function $\phi_c$ which is input to asymmetry compensation logic element 506 and also to mathematics element 510 along with a frequency response function R. The driver 502 signal is also input to phase detector element 504, which compares this signal with the motion signal $\dot{u}_1$, having associated phase angle $\theta_1$, from the flow conduit motion sensor 501. The output from phase detector element 504 is then input to asymmetry compensation logic element 506. Asymmetry compensation logic element 506 employs eqs. 89 or 90. The resulting processed signal is input to a half-angle tangent function logic element 507. The outputs of the half-angle tangent function logic element 507, the frequency response function logic element 508 and the temperature-compensated spring constant are combined with calibration constants in mathematics logic element 510. The resulting output of the processed signals from the driver and flow conduit motion sensor is the mass flow rate, according to the formula of equation (74). This embodiment takes account of asymmetry and viscous damping effects.

Figure 13 depicts a sixth preferred embodiment of the signal processing logic for a mass flow meter which includes two motion sensors 601 and 602 positioned essentially equidistant from the center of the flow conduit to monitor the motion of two sides of the oscillating flow conduit. Driver 604 voltage signal $V_d$ is input to frequency measurement element 605 to determine the frequency at which the oscillating flow conduit is driven. This drive frequency is input to frequency response function element 609. The drive frequency is also input to mathematics logic element 611 for further processing. The driver 604 voltage signal is also input to damping measurement element 606, which generates a damping ratio $\zeta_c$ which is input to frequency response function element 609. Frequency response function element 609 generates a frequency response function R and a Coriolis phase angle function $\phi_c$ which are input to mathematics logic element 611. The Coriolis phase angle function $\phi_c$ is also input to asymmetry compensation logic element 610. Temperature sensor 603 is employed to provide a temperature of the oscillating flow conduit. This temperature measurement is input to temperature-compensation logic element 612, which processes the signal to produce two temperature-compensated spring constant signals. One spring constant signal, $k_b(T)$, is for the oscillation degree of freedom. The other, $k_c(T)$, is for the Coriolis degree of freedom. Both temperature-compensated spring constant signals are input to frequency response function logic element 609, which combines these signals with the drive frequency and damping measurement to determine a frequency response function which accounts for any change in fluid density and for viscous damping. The Coriolis spring constant is also input to mathematics logic element 611. The signals $\dot{u}_1$ and $\dot{u}_2$ from each of the motion sensors 601 and 602, which have associated respective phase angles $\theta_1$ and $\theta_2$, are input to phase detector element 607 which determines the phase angle difference between the two signals. The phase angle difference is then processed by asymmetry compensation logic element 610 which combines this signal with the Coriolis phase angle function. Asymmetry compensation logic element 610 employs eq. 95. The result of this processing is input to mathematics logic element 611 for further processing. The measured drive frequency, processed frequency response function, processed half-angle tangent function and temperature-compensated Coriolis spring constant are combined with calibration constant in mathematics logic element 611 according to the formula of equation (74) to produce the mass flow rate as an output.

As one skilled in the art will recognize, this embodiment takes into account inherent nonlinear effects in measuring mass flow rates along with asymmetry and viscous damping effects, which are not accounted for in the existing embodiments. Such inherent nonlinear, asymmetric and viscous damping effects are reflected in the relationship between mass flow rate and phase angle in equation (74) and are embodied in the system of Figure 13.

It should be noted that for multiple motion sensors, the frequency of oscillation can be extracted and averaged to give a system-averaged frequency of oscillation. Similarly, for multiple tube mass flow meters, the frequency signals from the multiple tubes can be compared and if the frequencies are not within predetermined limits, a warning signal can be given.

The above discussion and related illustrations of the present invention are directed primarily to preferred embodiments and practices of the invention. However, it is believed that numerous changes and modifications in the actual implementation of the concepts described herein will be apparent to those skilled in the art, and it is contemplated that such changes and modifications may be made without departing from the scope of the invention as defined by the following claims.

## Claims

1. A flow meter (10) for flowable materials comprising:

    a. a support (22);

    b. a continuous conduit (12) which

        (1) is free of pressure sensitive joints,

        (2) is solidly mounted to said support (22) at an inlet end and an outlet end of said conduit (12),

        (3) has an oscillation axis (B-B) and a second axis (A-A), substantially transverse to said oscillation axis (B-B), about which Coriolis force acts when fluid is flowing through said conduit (12) under oscillation conditions;

    c. driver means (14) for oscillating said conduit (12) about said oscillation axis (B-B);

    d. sensor means (16) for measuring motion of said conduit (12) as a result of elastic deformation of said conduit (12) around said second axis (A-A) thereof upon oscillation of said conduit (12) with fluid flow therethrough, thereby providing motion signals; and

    e. signal processing means, comprising:

        (1) means for measuring frequency of oscillation of said conduit (12);

        (2) logic means for, converting said frequency of oscillation to a frequency response function;

        (3) logic means for comparing said motion signals to determine a phase angle difference between said signals; and

        (4) logic means for, converting said phase angle difference to a half-angle tangent function of said phase angle difference;

        signal processing means including:

        logic means for mathematically combining said frequency response function, said frequency of oscillation and said half-angle tangent function with at least one calibration constant and which comprise

        means which are arranged to calculate mass flow rate $\dot{m}_o$ according to the formula

$$\dot{m}_o = K_1 \, k_c \, R \, \frac{\tan\left(\delta\Theta^\circ/2\right)}{\omega_d}$$

    where

        $\delta\Theta^\circ$ is a phase angle difference between output signals developed by said motion sensors;

        $\tan\left(\delta\Theta^\circ/2\right)$ is a half-angle tangent function;

        $K_1$ is a calibration constant proportional to a ratio of a bending force acting on said flow conduit to a viscous damping force acting on said flow conduit;

        $k_c$ is an elastic spring constant of said flow conduit which is fixed at constant temperature and is otherwise temperature compensated;

$$R = \frac{\sqrt{(\omega_c^2 - \omega_d^2)^2 + (2\omega_c\omega_d\zeta_c)^2}}{\omega_c^2}$$

    is a frequency response function;

        $\omega_d$ is a natural frequency of said flow conduit about said oscillation axis;

        $\omega_c$ is a natural frequency of said flow conduit about said second axis;

        $\zeta_c$ is a damping coefficient about said second axis;

whereby a mass flow rate measurement is obtained.

2. A flow meter as claimed in claim 1, wherein

a. said sensor means comprises

first sensor means for measuring motion of said conduit (12) at a first location along said conduit (12), thereby providing a first motion signal, and

second sensor means for measuring motion of said conduit (12) at a second location along said conduit (12), thereby providing a second motion signal; and

b. in said signal processing means, said means for measuring frequency of oscillation of said conduit (12) comprise

(i) logic means for comparing said first and second motion signals to determine a phase angle difference between said signals; and

(ii) means for converting at least one of said first and second motion signals to a frequency of oscillation.

3. A flow meter as claimed in claim 2, wherein said means for converting at least one of said first and second motion signals to a frequency of oscillation comprises

a. means for converting said first motion signal to a first frequency of oscillation,

b. means for converting said second motion signal to a second frequency of oscillation and

c. logic means for averaging said first and second frequencies of oscillation.

4. A flow meter as in claim 1, wherein

a. said sensor comprises

first sensor means for measuring motion of said conduit at a first location along said conduit, thereby providing a first motion signal and

second sensor means for measuring motion of said conduit at a second location along said conduit, thereby providing a second motion signal;

b. in said signal processing means

(1) the means for measuring frequency of oscillation of said conduit comprise

(i) sensor means for detecting a driver motion signal and

(ii) logic means for measuring a frequency of oscillation of said conduit;

(2) the logic means for, comparing said motion signals comprise logic means for comparing said first and second motion signals to determine a motion sensor phase angle difference; and

(3) the logic means for converting said phase angle difference comprise

(i) means for dividing said motion sensor phase angle difference by 2 to produce a motion sensor phase half-angle difference,

(ii) logic means for comparing said first motion signal and said driver motion signal to determine a first phase angle difference between said first motion signal and said driver motion signal,

(iii) logic means for converting said first phase angle difference to a first asymmetry-compensated phase angle difference,

(iv) logic means for comparing said second motion signal and said driver motion signal to determine a second phase angle difference between said second motion signal and said driver motion signal,

(v) logic means for converting said second phase angle difference to a second asymmetry-compensated phase angle difference,

(vi) logic means for comparing said motion sensor phase half-angle difference, said first asymmetry-compensated angle difference and said second asymmetry-compensated phase angle difference to produce a system phase half-angle difference and

(vii) logic means for converting said system phase half-angle difference to a half-angle tangent function.

5. A flow meter as in claim 4, wherein

a. said logic means for converting said first phase angle difference to a first asymmetry-compensated phase angle difference comprises means for converting according to the formula

$$\tan\delta\Theta_R = \frac{\tan(\delta\Theta_1/2)\cos\phi_c}{1 - \tan(\delta\Theta_1/2)\sin\phi_c};$$

b. said logic means for converting said second phase angle difference to a second asymmetry-compensated phase angle difference comprises means for converting according to the formula

$$\tan \delta\Theta_L = \frac{\tan(\delta\Theta_2/2)\cos\phi_c}{1 + \tan(\delta\Theta_2/2)\sin\phi_c};$$

where

$\delta\Theta_R$ is said first phase angle difference,

$\delta\Theta_1$ is said first asymmetry-compensated phase angle difference,

$\phi_c$ is a Coriolis phase angle function,

$\delta\Theta_L$ is said second phase angle difference, and

$\delta\Theta_2$ is said second asymmetry-compensated phase angle difference; and

c. said logic means for comparing said motion sensor phase half-angle difference, said first asymmetry-compensated phase angle difference and said second asymmetry-compensated phase angle difference to produce a system phase half-angle difference comprises means to do so according to the relationships

(1)      if $1/2\delta\Theta_0 = 1/2\delta\Theta_1 = 1/2\delta\Theta_2$, then $1/2\delta\Theta° = 1/2\delta\Theta_0$,

(2)      if $1/2\delta\Theta \neq 1/2\delta\Theta_1 = 1/2\delta\Theta_2$, then $1/2\delta\Theta° = 1/2\delta\Theta_1$,

(3)      if $1/2\delta\Theta = 1/2\delta\Theta_1 \neq 1/2\delta\Theta_2$, then $1/2\delta\Theta° = 1/2\delta\Theta_0$,

(4)      if $1/2\delta\Theta = 1/2\delta\Theta_2 \neq 1/2\delta\Theta_1$, then $1/2\delta\Theta° = 1/2\delta\Theta_0$,

whereby lack of agreement with c(1) through c(4) produces a warning signal.

6. A flow meter as in claim 1, wherein, in said signal processing means,

a. the means for measuring frequency of oscillation of said conduit comprises

(i) sensor means for detecting a driver motion signal and

(ii) logic means for measuring a frequency of oscillation of said conduit;

b. the logic means for comparing said motion signals comprise means for comparing at least one of said motion signals and said driver motion signal to determine a phase angle difference between said motion signal and said driver motion signal; and

c. the logic means for, converting said phase angle difference comprise

(i) means for converting said phase angle difference to an asymmetry-compensated half-angle difference and

(ii) logic means for converting said asymmetry-compensated phase half-angle difference to a half-angle tangent function.

7. A flow meter as in claim 1, further comprising:

a. temperature sensor means for measuring conduit temperature, thereby providing a temperature signal and

b. logic means for converting said temperature signal to at least one temperature compensated spring constant signal, wherein

said logic means for mathematically combining said frequency response function, said frequency and said half-angle tangent function with at least one calibration constant comprise means which also mathematically combine said temperature compensated spring constant signal therewith, thereby producing a mass flow rate measurement.

8. A flow meter as in claim 1, further comprising:

a. temperature sensor means for measuring conduit temperature, thereby providing a temperature signal;

b. logic means for converting said temperature signal to a temperature compensated spring constant representing the oscillation degree of freedom of said conduit and corresponding to conduit motion about said oscillation axis;

c. logic means for converting said temperature signal to a temperature-compensated spring constant representing the Coriolis degree of freedom of said conduit and corresponding to conduit motion about said second axis;

d. logic means for converting said temperature-compensated spring constant representing the oscillation degree of freedom and said frequency of oscillation of said conduit to a fluid density;

e. logic means for converting said temperature-compensated spring constant representing the Coriolis degree of freedom of said conduit and said fluid density to a Coriolis natural frequency;

f. logic means for converting said Coriolis natural frequency and said frequency of oscillation to a frequency response function, thereby correcting for density variations; wherein

g. the logic means which, in use, mathematically combine said frequency, said frequency response function and said half-angle tangent function with at least one calibration constant comprise means which also mathematically combine said temperature compensated spring constant representing the Coriolis degree of freedom therewith,

thereby producing a mass flow rate measurement.

9. A flow meter for flowable materials comprising:

a. a support (22);

b. a continuous conduit (12) which

(1) is free of pressure sensitive joints,

(2) is solidly mounted to said support (22) at an inlet end and an outlet end of said conduit (12),

(3) has an oscillation axis (B-B) and a second axis (A-A), substantially transverse to said oscillation axis (B-B), about which Coriolis force acts when fluid is flowing through said conduit (12) under oscillation conditions;

c. driver means (14) for oscillating said conduit (12) about said oscillation axis (B-B);

d. sensor means for measuring motion of said driver means (14), thereby providing a driver motion signal;

e. sensor means (16) for measuring motion of said conduit (12) as a result of elastic deformation of said conduit (12) around said second axis thereof upon oscillation of said conduit with fluid flow therethrough, thereby providing motion signals; and

f. signal processing means, comprising:

(1) means for measuring frequency of oscillation of said conduit (12);

(2) logic means for converting said driver motion signal to a damping measurement; and

(3) logic means for, converting said frequency of oscillation and said damping measurement to a frequency response function and a Coriolis phase angle function;

the signal processing means further comprising:

(4) logic means for, comparing said driver motion signal and one of said flow conduit motion signals to determine a phase angle difference between said signals;

(5) logic means for, converting said phase angle difference and said Coriolis phase angle function to a trigonometric function of said phase angle difference; and

(6) logic means for, mathematically combining said frequency response function, said frequency of oscillation and said trigonometric function with at least one calibration constant and which comprise logic means which further mathematically combine therewith said damping measurement, and are arranged to calculate mass flow $\dot{m}_o$ according to the formula

$$\dot{m}_o = K_1 \, k_c \, R \, \frac{1}{\omega_d} \frac{\sin \delta\Theta}{\cos(\delta\Theta - \phi_c)}$$

where

$\delta\Theta$ is a phase angle difference between output signals developed by said driver and flow conduit motion sensors;

$\phi_c$ is a Coriolis phase angle function;

$$\frac{\sin\delta\Theta}{\cos(\delta\Theta - \phi_c)}$$

is a trigonometric function;

$K_1$ is a calibration constant proportional to a ratio of a bending force acting on said flow conduit to a viscous damping force acting on said flow conduit;

$k_c$ is an elastic spring constant of said flow conduit which is fixed at constant temperature and otherwise is temperature-compensated;

$$R = \frac{\sqrt{(\omega_c{}^2 - \omega_d{}^2)^2 + (2\omega_c\omega_d\zeta_c)^2}}{\omega_c{}^2}$$

is a frequency response function;

$\omega_d$ is a natural frequency of said flow conduit about said oscillation axis;

$\omega_c$ is a natural frequency of said flow conduit about said second axis;

$\zeta_c$ is a damping coefficient about said second axis.

10. A flow meter as in claim 9, further comprising:

a. temperature sensor means for measuring conduit temperature, thereby providing a temperature signal, and

b. logic means for converting said temperature signal to at least one temperature-compensated spring constant, wherein

c. said logic means for mathematically combining said frequency response function, said frequency and said trigonometric function with at least one calibration constant comprise means which also mathematically combine said temperature-compensated spring constant therewith, thereby producing a mass flow rate measurement.

11. A flow meter as in claim 9, further comprising:

a. temperature sensor means for measuring conduit temperature, thereby providing a temperature signal,

b. logic means for converting said temperature signal to a temperature-compensated spring constant representing the oscillation degree of freedom of said conduit and corresponding to conduit motion about said oscillation axis,

c. logic means for converting said temperature signal to a temperature-compensated spring constant representing the Coriolis degree of freedom of said conduit and corresponding to conduit motion about said second axis,

d. logic means for converting said temperature-compensated spring constant representing the oscillation degree of freedom of the conduit and said frequency oscillation to a fluid density,

e. logic means for converting said temperature-compensated spring constant representing the Coriolis degree of freedom of said conduit and said fluid density to a Coriolis natural frequency and

f. logic means for converting said Coriolis natural frequency, said frequency of oscillation and said damping measurement to a frequency response function, thereby correcting for density variations; wherein

g. the logic means for, mathematically combining said frequency response function, said frequency and said trigonometric function with at least one calibration constant comprise means which also mathematically combine therewith said temperature compensated spring constant representing the Coriolis degree of freedom, thereby producing a mass flow rate measurement.

12. A flow meter (10) for flowable materials comprising:

a. a support (22);

b. a continuous conduit which

(1) is free of pressure sensitive joints,

(2) is solidly mounted to said support (22) at an inlet end and an outlet end of said conduit (12),

(3) has an oscillation axis (B-B) and a second axis (A-A), substantially transverse to said oscillation axis (B-B), about which Coriolis force acts when fluid is flowing through said conduit (12) under oscillation conditions;

c. driver means (14) for oscillating said conduit (12) about said oscillation axis (B-B);

d. sensor means for measuring motion of said driver means, thereby providing a driver motion signal;

e. sensor means (16) for measuring motion of said conduit (12) as a result of elastic deformation of said conduit around said second axis (A-A) thereof upon oscillation of said conduit with fluid flow therethrough, thereby providing motion signals; and

f. signal processing means comprising:

(1) means for measuring frequency of oscillation of said conduit;

(2) logic means for converting said driver motion signal to a damping measurement; and

(3) logic means which, in use, convert said damping measurement and said frequency of oscillation to a frequency response function and a Coriolis phase angle function; characterised in that the signal processing means further comprises:

(4) logic means for, comparing said driver motion signal and one of said flow conduit motion signals to determine a phase angle difference between said signals;

(5) logic means for, converting said phase angle difference and said Coriolis phase angle function to an asymmetry-compensated half-angle function;

(6) logic means for, converting said asymmetry-compensated half-angle function to a half-angle tangent function; and

(7) logic means for mathematically combining said frequency response function, said frequency of oscillation and said half-angle tangent function with at least one calibration constant and which comprise.

means which are arranged to calculate mass flow rate $\dot{m}_o$ according to the formula:

$$\dot{m}_o = K_1\, k_c\, R\, \frac{\tan(\delta\Theta^\circ/2)\,\cos\phi_c}{\omega_d}$$

where

$\delta\Theta$ is a phase angle difference between output signals developed by said driver and flow conduit motion sensors;

$\delta\Theta^\circ$ is a phase angle difference between output signals developed by said flow conduit motion sensors when said motion is undamped;

$\phi_c$ is a Coriolis phase angle function;

$$\tan\frac{\delta\Theta^\circ}{2} = \frac{\tan\delta\Theta}{\cos^2\phi_c + \tan\delta\Theta \cos\phi_c}$$

is a half angle tangent function for undamped motion;

$K_1$ is a calibration constant proportional to a ratio of a bending force acting on said flow conduit to a viscous damping force acting on said flow conduit;

$k_c$ is an elastic spring constant of said flow conduit which is fixed at constant temperature and otherwise must be temperature compensated;

$$R = \frac{\sqrt{(\omega_c{}^2 - \omega_d{}^2)^2 + (2\omega_c\,\omega_d\zeta_c)^2}}{\omega_c{}^2}$$

is a frequency response function;

$\omega_d$ is a natural frequency of said flow conduit about said oscillation axis;

$\omega_c$ is a natural frequency of said flow conduit about said second axis;

$\zeta_c$ is a damping coefficient about said second axis.

13. A flow meter as in claim 12, further comprising:

(a) temperature sensor means for measuring conduit temperature, thereby providing a temperature signal and

(b) logic means for converting said temperature signal to at least one temperature compensated spring constant; wherein

(c) said logic means for, mathematically combining said frequency response function, said frequency and said half angle tangent function with at least one calibration constant comprise means which also mathematically combine said temperature compensated spring constant therewith, thereby producing a mass flow rate measurement.

14. A flow meter as in claim 12, further comprising:

a. temperature sensor means for measuring conduit temperature, thereby providing a temperature signal;

b. logic means for converting said temperature signal to a temperature compensated spring constant representing the oscillation degree of freedom of said conduit and corresponding to conduit motion about said oscillation axis;

c. logic means for converting said temperature signal to a temperature-compensated spring constant representing the Coriolis degree of freedom of said conduit and corresponding to conduit motion about said second axis;

d. logic means for converting said frequency and said temperature-compensated spring constant representing the oscillation degree of freedom to a fluid density;

e. logic means for converting said temperature compensated spring constant representing the Coriolis degree of freedom and said fluid density to a Coriolis natural frequency; and

f. logic means for converting said Coriolis natural frequency, said frequency of oscillation and said damping measurement to a frequency response function, thereby correcting for density variations; wherein

g. said logic means for mathematically combining said frequency response function, said frequency and said half-angle tangent function with at least one calibration constant comprise means which also mathematically combine said Coriolis spring constant therewith,

thereby producing a mass flow rate measurement.

15. A flow meter for flowable materials comprising:

a. a support (22);

b. a continuous conduit (12) which

(1) is free of pressure sensitive joints,

(2) is solidly mounted to said support (22) at an inlet end and an outlet end of said conduit (12),

(3) has an oscillation axis (B-B) and a second axis (A-A), substantially transverse to said oscillation axis (B-B), about which Coriolis force acts when fluid is flowing through said conduit (12) under oscillation conditions;

c. driver means (14) for oscillating said conduit (12) about said oscillation axis (B-B);

d. sensor means for measuring motion of said driver means, thereby providing a driver motion signal;

e. sensor means (16) for measuring motion of said conduit (12) as a result of elastic deformation of said conduit around said second axis (A-A) thereof upon oscillation of said conduit (12) with fluid flow therethrough, thereby providing motion signals; and

f. signal processing means, comprising:

(1) means for measuring frequency of oscillation of said conduit; and

(2) logic means for, converting said driver motion signal to a damping measurement;

(3) logic means for converting said frequency of oscillation and said damping measurement to a frequency response function;

(4) logic means for, comparing said motion signals to determine a phase angle difference between said signals;

(5) logic means for converting said phase angle difference to a half-angle tangent function of said phase angle difference; and

(6) logic means for mathematically combining said frequency response function, said frequency of oscillation and said half-angle tangent function with at least one calibration constant and which comprise means to calculate mass flow rate $\dot{m}_o$ according to the formula

$$\dot{m}_o = K_1\, k_c\, R\, \frac{\tan(\delta\Theta°/2)}{\omega_d} \cos\phi_c$$

where

$\delta\Theta°$ is a phase angle difference between output signals developed by said motion sensors for undamped motion;

$\phi_c$ is a Coriolis phase angle function;

$\delta\Theta_1$ is a phase angle difference between one motion sensor and the flow conduit midpoint;

$\delta\Theta_2$ is a phase angle difference between the other motion sensor and the flow conduit midpoint;

$$\tan\left(\frac{\delta\Theta°}{2}\right) = \frac{\sqrt{1 + \tan^2(\delta\Theta_1 + \delta\Theta_2)\ \sec^2\phi_c} - 1}{\tan(\delta\Theta_1 + \delta\Theta_2)}$$

is a half angle tangent function;

$K_1$ is a calibration constant proportional to a ratio of a bending force acting on said flow conduit to a viscous damping force acting on said flow conduit;

$k_c$ is an elastic spring constant of said flow conduit which is fixed at constant temperature but otherwise must be temperature compensated;

$$R = \frac{\sqrt{(\omega_c^2 - \omega_d^2)^2 + (2\omega_c\omega_c\zeta_c)^2}}{\omega_c^2}$$

is a frequency response function;

$\omega_d$ is a natural frequency of said flow conduit about said oscillation axis;

$\omega_c$ is a natural frequency of said flow conduit about said second axis;

$\zeta_c$ is a damping coefficient about said second axis.

16. A flow meter as in claim 15, wherein said sensor means for measuring motion of the conduit comprise

(1) first sensor means for measuring motion of said conduit at a first location along said conduit, thereby providing a first motion signal and

(2) second sensor means for measuring motion of said conduit at a second location along said conduit, thereby providing a second motion signal.

17. A flow meter as in claim 15, further comprising:

a. temperature sensor means for measuring conduit temperature, thereby providing a temperature signal and

b. logic means for converting said temperature signal to at least one temperature compensated spring constant, wherein

c. said logic means for, mathematically combining said frequency response function, said frequency and said half-angle tangent function with at least one calibration constant comprise means for also combining said temperature compensated spring constant therewith, thereby producing a mass flow rate measurement.

18. A flow meter as in claim 15, further comprising:
a. temperature sensor for measuring conduit temperature, thereby providing a temperature signal;
b. logic means for converting said temperature signal to a temperature compensated spring constant representing the oscillation degree of freedom of said conduit and corresponding to conduit motion about said oscillation axis;
c. logic means for converting said temperature signal to a temperature compensated spring constant representing the Coriolis degree of freedom of said conduit and corresponding to conduit motion about said second axis;
d. logic means for converting said temperature compensated spring constant representing the oscillation degree of freedom and said frequency of oscillation to a fluid density;
e. logic means for converting said temperature compensated spring constant representing the Coriolis degree of freedom and said fluid density to a Coriolis natural frequency; and
f. logic means for converting said Coriolis natural frequency, said frequency of oscillation and said damping measurement to a frequency response function, thereby correcting for density variations; wherein
g. said logic means for, mathematically combining said frequency, said frequency response function and said half-angle tangent function with at least one calibration constant comprise means for also combining said temperature compensated spring constant representing the Coriolis degree of freedom therewith, thereby producing a mass flow rate measurement.

**Patentansprüche**

1. Durchflußmesser (10) für fließfähige Materialien, umfassend:
a. einen Träger (22);
b. eine fortlaufende Leitung (12), die
(1) frei von druckempfindlichen Verbindungen ist,
(2) an dem Träger (22) bei einem Einlaßende und einem Auslaßende der Leitung (12) fest montiert ist,
(3) eine Schwingungsachse (B-B) und eine zweite Achse (A-A) hat, welche im wesentlichen quer zu der Schwingungsachse (B-B) verläuft, um welche die Corioliskraft wirkt, wenn Fluid durch die Leitung (12) bei Schwingungsbedingungen fließt;
c. Antriebsmittel (14) zum Schwingen der Leitung (12) um die Schwingungsachse (B-B);
d. Sensormittel (16) zum Messen der Bewegung der Leitung (12) als Ergebnis elastischer Verformung der Leitung (12) um deren zweite Achse bei Schwingung der Leitung (12) mit hindurchströmendem Fluiddurchfluß, wobei Bewegungssignale gebildet werden; und
e. Signalverarbeitungsmittel, die umfassen:
(1) Mittel zum Messen der Frequenz der Schwingung der Leitung (12);
(2) Logikmittel zum Umsetzen der Schwingungsfrequenz in eine Frequenzgangsfunktion;
(3) Logikmittel zum Vergleichen der Schwingungssignale, um eine Phasenwinkeldifferenz zwischen den Signalen zu bestimmen; und
(4) Logikmittel zum Umsetzen der Phasenwinkeldifferenz in eine Halbwinkeltangentenfunktion der Phasenwinkeldifferenz;
Signalverarbeitungsmittel, einschließlich Logikmitteln zum rechnerischen Kombinieren der Frequenzgangsfunktion, der Schwingungsfrequenz und der Halbwinkeltangentenfunktion mit mindestens einer Eichkonstanten, und die umfassen
derart angeordnete Mittel, daß sie den Massedurchfluß (Durchflußrate) $m_o$ entsprechend der Formel berechnen

$$\dot{m}_o = K_1 k_c R \frac{\tan(\delta\theta°/2)}{\omega_d},$$

worin
$\delta\theta°$ eine Phasenwinkeldifferenz zwischen Ausgangssignalen ist, welche durch die Bewegungssensoren entwickelt werden;
$\tan(\delta\theta°/2)$ eine Halbwinkeltangentenfunktion ist;
$K_1$ eine Eichkonstante ist, die proportional einem Verhältnis einer Biegekraft, die auf die Durchflußleitung wirkt, zu einer zähflüssigen Dämpfungskraft ist, welche auf die Durchflußleitung wirkt;

$k_c$ eine elastische Federkonstante der Durchflußleitung ist, die auf konstanter Temperatur gehalten wird und sonst temperaturkompensiert ist;

$$R = \frac{\sqrt{(\omega_c^2 - \omega_d^2)^2 + (2\omega_c\omega_d\zeta_c)^2}}{\omega_c^2}$$

eine Frequenzgangsfunktion ist;

$\omega_d$ eine Resonanzfrequenz der Durchflußleitung um die Schwingungsachse ist;

$\omega_c$ eine Resonanzfrequenz der Durchflußleitung um die zweite Achse ist;

$\zeta_c$ ein Dämpfungskoeffizient um die zweite Achse ist; womit eine Massedurchflußmessung (Durchflußrate) erreicht wird.

2. Durchflußmesser nach Anspruch 1, worin

a. die Sensormittel erste Sensormittel zum Messen der Bewegung der Leitung (12) an einer ersten Stelle entlang der Leitung (12) umfassen, wodurch ein erstes Bewegungssignal geschaffen wird, und zweite Sensormittel zum Messen der Bewegung der Leitung (12) an einer zweiten Stelle entlang der Leitung (12), umfassen, wodurch ein zweites Bewegungssignal geschaffen wird, und in den Signalverarbeitungsmitteln die Mittel zum Messen der Schwingungsfrequenz der Leitung (12) umfassen

(i) Logikmittel zum Vergleichen der ersten und zweiten Bewegungssignale, um eine Phasenwinkeldifferenz zwischen diesen Signalen zu bestimmen, und

(ii) Mittel zum Umsetzen wenigstens eines Signals von den ersten und zweiten Bewegungssignalen in eine Schwingungsfrequenz.

3. Durchflußmesser nach Anspruch 2,

worin die Mittel zum Umsetzen wenigstens eines der Signale des ersten und des zweiten Bewegungssignals in eine Schwingungsfrequenz umfassen

a. Mittel zum Umsetzen des ersten Bewegungssignals in eine erste Schwingungsfrequenz,

b Mittel zum Umsetzen des zweiten Bewegungssignals in eine zweite Schwingungsfrequenz und

c. Logikmittel zur Mittelwertbildung der ersten und der zweiten Schwingungsfrequenzen.

4. Durchflußmesser nach Anspruch 1, bei dem

a. der Sensor umfaßt

erste Sensormittel zum Messen der Bewegung der Leitung an einer ersten Stelle entlang der Leitung, wodurch ein erstes Bewegungssignal gebildet wird, und

zweite Sensormittel zum Messen der Bewegung der Leitung an einer zweiten Stelle entlang der Leitung, wodurch ein zweites Bewegungssignal gebildet wird;

b. in den Signalverarbeitungsmitteln

(1) die Mittel zum Messen der Schwingungsfrequenz der Leitung umfassen

(i) Sensormittel zum Detektieren eines Antriebsbewegungssignals und

(ii) Logikmittel zum Messen einer Schwingungsfrequenz der Leitung;

(2) die Logikmittel zum Vergleichen der Bewegungssignale Logikmittel zum Vergleichen der ersten und zweiten Bewegungssignale umfassen, um eine Bewegungssensorphasenwinkeldifferenz zu bestimmen, und

(3) die Logikmittel zum Umsetzen der Phasenwinkeldifferenz umfassen

(i) Mittel zum Teilen der Bewegungssensorphasendifferenz durch 2, um eine Bewegungssensorphasenhalbwinkeldifferenz zu bilden,

(ii) Logikmittel zum Vergleichen des ersten Bewegungssignals und des Bewegungssantriebssignals zum Bestimmen einer ersten Phasenwinkeldifferenz zwischen dem ersten Bewegungssignal und dem Antriebsbewegungssignal,

(iii) Logikmittel zum Umsetzen der ersten Phasenwinkeldifferenz in eine erste asymmetriekompensierte Phasenwinkeldifferenz,

(iv) Logikmittel zum Vergleichen des zweiten Bewegungssignals und des Antriebsbewegungssignals zum Bestimmen einer zweiten Phasenwinkeldifferenz zwischen dem zweiten Bewegungssignal und dem Antriebsbewegungssignal,

(v) Logikmittel zum Umsetzen der zweiten Phasenwinkeldifferenz in eine zweite asymmetriekompensierte Phasenwinkeldifferenz,

(vi) Logikmittel zum Vergleichen der ersten Bewegungssensorphasenhalbwinkeldifferenz, der ersten asymmetriekompensierten Winkeldifferenz und der zweiten asymmetriekomenpensierten Phasenwinkeldifferenz, um eine Systemphasenhalbwinkeldifferenz zu erzeugen, und (vii)Logikmittel zum Umsetzen der Systemphasenhalbwinkeldifferenz in eine Halbwinkeltangentenfunktion.

5.  Durchflußmesser nach Anspruch 4, worin

a. die Logikmittel zum Umsetzen der ersten Phasenwinkeldifferenz in eine ersten asymmetriekompensierte Phasenwinkeldifferenz Mittel zum Umsetzen entsprechend der Beziehung umfassen

$$\tan \delta\theta_R = \frac{\tan(\delta\theta_1/2)\cos\phi_c}{1 - \tan(\delta\theta_1/2)\sin\phi_c};$$

b. die Logikmittel zum Umsetzen der zweiten Phasenwinkeldifferenz in eine zweite asymmetriekompensierte Phasenwinkeldifferenz Mittel zum Umsetzen entsprechend der Beziehung umfassen

$$\tan \delta\theta_L = \frac{\tan(\delta\theta_2/2)\cos\phi_c}{1 + \tan(\delta\theta_2/2)\sin\phi_c};$$

worin

$\delta\theta_R$ die erste Phasenwinkeldifferenz ist,

$\delta\theta_1$ die erste asymmetriekompensierte Phasenwinkeldifferenz ist,

$\phi_c$ eine Coriolisphasenwinkelfunktion ist,

$\delta\theta_L$ die zweite Phasenwinkeldifferenz ist und

$\delta\theta_2$ die zweite asymmetriekompensierte Phasenwinkeldifferenz ist; und

(c) die Logikmittel zum Vergleichen der Bewegungssensorphasenhalbwinkeldifferenz, der ersten asymmetriekompensierten Phasenwinkeldifferenz und der zweiten asymmetriekompensierten Phasenwinkeldifferenz, um eine Systemphasenwinkeldifferenz zu erzeugen, Mittel umfassen, um dies entsprechend den Beziehungen durchzuführen:

(1)      wenn $1/2\delta\theta_0 = 1/2\delta\theta_1$ , $1/2\delta\theta_2$, dann $1/2\delta\theta° = 1/2\delta\theta_0$

(2)      wenn $1/2\delta\theta \neq 1/2\delta\theta_1 = 1/2\delta\theta_2$, dann $1/2\delta\theta° = 1/2\delta\theta_1$

(3)      wenn $1/2\delta\theta = 1/2\delta\theta_1 \neq 1/2\delta\theta_2$, dann $1/2\delta\theta° = 1/2\delta\theta_0$

(4)      wenn $1/2\delta\theta = 1/2\delta\theta_2 \neq 1/2\delta\theta_1$, dann $1/2\delta\theta° = 1/2\delta\theta_0$,

wobei mangelnde Übereinstimmung zwischen c(1) bis c(4) ein Warnsignal erzeugt.

6.  Durchflußmesser nach Anspruch 1,

worin in den Signalverarbeitungsmitteln

a. die Mittel zur Messung der Schwingungsfrequenz der Leitung umfassen

(i) Sensormittel zum Detektieren eines Antriebsbewegungssignals und

(ii)Logikmittel zum Messen einer Schwingungsfrequenz der Leitung;

b. die Logikmittel zum Vergleichen der Bewegungssignale Mittel zum Vergleichen wenigstens eines der Bewegungssignale und des Antriebsbewegungssignals umfassen, um eine Phasenwinkeldifferenz zwischen dem Bewegungssignal und dem Antriebsbewegungssignal zu bestimmen, und

c. die Logikmittel zum Umsetzen der Phasenwinkeldifferenz umfassen

(i) Mittel zum Umsetzen der Phasenwinkeldifferenz in eine asymmetriekompensierte Halbwinkeldifferenz und

(ii)Logikmittel zum Umsetzen der asymmetriekompensierten Phasenhalbwinkeldifferenz in eine Halbwinkeldifferenztangentenfunktion.

7.  Durchflußmesser nach Anspruch 1, weiterhin umfassend:

a. Temperatursensormittel, um die Leitungstemperatur zu messen, wobei ein Temperatursignal gebildet wird, und

b. Logikmittel zum Umsetzen des Temperatursignals in wenigstens ein temperaturkompensiertes Federkonstantensignal, wobei

die Logikmittel zum rechnerischen Kombinieren der Frequenzgangsfunktion, der Frequenz und der Halbwinkeltangentenfunktion mit wenigstens einer Eichkonstanten Mittel umfassen, die auch rechnerisch das temperaturkompensierte Federkonstantensignal damit kombinieren und dadurch eine Massedurchflußmessung (Durchflußrate) erzeugen.

8.  Durchflußmesser nach Anspruch 1, weiterhin umfassend:

a. Temperatursensormittel zum Messen der Sensortemperatur, wobei ein Temperatursignal gebildet wird;

b. Logikmittel zum Umsetzen des Temperatursignals in eine temperaturkompensierte Federkonstante, welche den Schwingungsfreiheitsgrad der Leitung darstellt und einer Leitungsbewegung um die Schwingungsachse entspricht;

c. Logikmittel zum Umsetzen des Temperatursignals in eine temperaturkompensierte Federkonstante, welche den Coriolisfreiheitsgrad der Leitung darstellt und einer Leitungsbewegung um die zweite Achse entspricht;

d. Logikmittel zum Umsetzen der temperaturkompensierten Federkonstanten, welche den Schwingungsfreiheitsgrad und die Schwingungsfrequenz der Leitung darstellt, in eine Fluiddichte;

e. Logikmittel zum Umsetzen der temperaturkompensierten Federkonstanten, welche den Coriolisfreiheitsgrad der Leitung darstellt, und der Fluiddichte in eine Coriolisresonanzfrequenz;

f. Logikmittel zum Umsetzen der Coriolisresonanzfrequenz und der Schwingungsfrequenz in eine frequenzabhängige Funktion, womit Dichteänderungen korrigiert werden; worin

g. die Logikmittel, die im Betrieb die Frequenz, die frequenzabhängige Funktion und die Halbwinkeltangentenfunktion mit wenigstens einer Eichkonstanten rechnerisch kombinieren, Mittel umfassen, die auch die temperaturkompensierte Federkonstante, welche den Coriolisfreiheitsgrad darstellt, damit kombinieren,

wodurch eine Massedurchflußmessung (Durchflußrate) erzeugt wird.

9. Durchflußmesser für fließfähige Materialien, umfassend:

a. einen Träger (22);

b. eine fortlaufende Leitung (12), die

(1) frei von druckempfindlichen Verbindungen ist,

(2) an dem Träger (22) bei einem Einlaßende und einem Auslaßende der Leitung (12) fest montiert ist,

(3) eine Schwingungsachse (B-B) und eine zweite Achse (A-A) hat, welche im wesentlichen quer zu der Schwingungsachse (B-B) verläuft, um welche die Corioliskraft wirkt, wenn Fluid durch die Leitung (12) bei Schwingungsbedingungen fließt;

c. Antriebsmittel (14) zum Schwingen der Leitung (12) um die Schwingungsachse (B-B);

d. Sensormittel (16) zum Messen der Bewegung der Leitung (12) als ein Ergebnis der elastischen Verformung der Leitung (12) um deren zweite Achse bei Schwingung der Leitung mit durch diese hindurchströmenden Fluiddurchfluß, wodurch Bewegungssignale gebildet werden; und

f. Signalverarbeitungsmittel, welche umfassen:

(1) Mittel zum Messen der Schwingungsfrequenz der Leitung (12);

(2) Logikmittel zum Umsetzen des Antriebsbewegungssignals in eine Dämpfungsmessung; und

(3) Logikmittel zum Umsetzen der Schwingungsfrequenz und der Dämpfungsmessung in eine Frequenzgangsfunktion und eine Coriolisphasenwinkelfunktion;

wobei die Signalverarbeitungsmittel weiterhin umfassen

(4) Logikmittel zum Vergleichen des Antriebsbewegungssignals und eines der Durchflußleitungsbewegungssignale, um eine Phasenwinkeldifferenz zwischen diesen Signalen zu bestimmen;

(5) Logikmittel zum Umsetzen der Phasendifferenz und der Coriolisphasenwinkelfunktion in eine trigonometrische Funktion der Phasenwinkeldifferenz; und

(6) Logikmittel zum rechnerischen Kombinieren der Frequenzgangsfunktion, der Schwingungsfrequenz und der trignonometrischen Funktion mit wenigstens einer Eichkonstanten, und die umfassen Logikmittel, die ferner rechnerisch damit die Dämpfungsmessung kombinieren und so ausgebildet sind, daß sie die Massendurchflußrate $\dot{m}_o$ entsprechend der Beziehung errechnen

$$\dot{m}_o = K_1 \, k_c \, R \, \frac{1}{\omega_d} \frac{\sin\delta\theta}{\cos(\delta\theta - \varphi_c)}$$

worin

$\delta\theta$ eine Phasenwinkeldifferenz zwischen Ausgangssignalen ist, welche durch die Antriebs- und Durchflußrohrbewegungssensoren gebildet werden;

$\phi_c$ eine Coriolisphasenwinkelfunktion ist;

$$\frac{\sin\delta\theta}{\cos(\delta\theta - \varphi_c)}$$

eine trigonometrische Funktion ist;

$K_1$ eine Eichkonstante ist, die proportional einem Verhältnis der Biegekraft, welche auf die Leitung wirkt, zu einer zähflüssigen Dämpfungskraft ist, die auf die Leitung wirkt,;

$k_c$ eine elastische Federkonstante der Leitung ist, die bei konstanter Temperatur fixiert und sonst temperaturkompensiert ist;

$$R = \sqrt{\frac{(\omega_c{}^2 - \omega_d{}^2)^2 + (2\omega_c\omega_d\zeta_c)^2}{\omega_c{}^2}}$$

eine Frequenzgangsfunktion ist;

$\omega_d$ eine Resonanzfrequenz der Durchflußleitung um die Schwingungsachse ist;

$\omega_c$ eine Resonanzfrequenz der Durchflußleitung um die zweite Achse ist;

$\zeta_c$ ein Dämpfungskoeffizient um die zweite Achse ist.

10. Durchflußmesser nach Anspruch 9, weiterhin umfassend:

a. Temperaturfühlermittel zum Messen der Leitungstemperatur, wodurch ein Temperatursignal gebildet wird, und

b. Logikmittel zum Umsetzen des Temperatursignals in wenigstens eine temperaturkompensierte Federkonstante, wobei

c. die Logikmittel zum rechnerischen Kombinieren der Frequenzgangsfunktion, der Frequenz und der trigonometrischen Funktion mit wenigstens einer Eichkonstanten Mittel umfassen, die damit auch die temperaturkompensierte Federkonstante kombinieren, wodurch eine Massedurchflußmessung (Durchflußrate) erfolgt.

11. Durchflußmesser nach Anspruch 9, weiterhin umfassend:

a. Temperatursensormittel, um die Leitungstemperatur zu messen und damit ein Temperatursignal zu bilden,

b. Logikmittel zum Umsetzen des Temperatursignals in eine temperaturkompensierte Federkonstante, welche den Schwingungsfreiheitsgrad der Leitung darstellt und der Leitungsbewegung um die Schwingungsachse entspricht,

c. Logikmittel zum Umsetzen des Temperatursignals in eine temperaturkompensierte Federkonstante, welche den Coriolisfreiheitsgrad der Leitung darstellt und der Leitungsbewegung um die zweite Achse entspricht,

d. Logikmittel zum Umsetzen der temperaturkompensierten Federkonstante, welche den Schwingungsfreiheitsgrad de Leitung darstellt, sowie der Schwingungsfrequenz in eine Fluiddichte,

e. Logikmittel zum Umsetzen der temperaturkompensierten Federkonstante, welche den Coriolisfreiheitsgrad der Leitung darstellt, sowie der Fluiddichte in eine Coriolisresonanzfrequenz und

f. Logikmittel zum Konvertieren der Coriolisresonanzfrequenz, der Schwingungsfrequenz und der Dämpfungsmessung in eine frequenzabhängige Funktion, womit Dichteänderungen korrigiert werden; wobei

g. die Logikmittel zum rechnerischen Kombinieren der frequenzabhängigen Funktion, der Frequenz und der trigonometrischen Funktion mit wenigstens einer Eichkonstanten Mittel umfassen, die damit auch die temperaturkompensierte Federkonstante kombinieren, welche den Coriolisfreiheitsgrad darstellt, wodurch eine Massedurchflußmessung (Durchflußrate) erfolgt.

12. Durchflußmesser (10) für fließfähige Materialien, umfassend:

a. einen Träger (22);

b. eine fortlaufende Leitung, die

(1) frei von druckempfindlichen Verbindungen ist,

(2) an dem Träger (22) bei einem Einlaßende und einem Auslaßende der Leitung (12) fest montiert ist,

(3) eine Schwingungsachse (B-B) und eine zweite Achse (A-A) hat, welche im wesentlichen quer zu der Schwingungsachse (B-B) verläuft, um welche die Corioliskraft wirkt, wenn Fluid durch die Leitung (12) unter Schwingungsbedingungen fließt;

c. Antriebsmittel (14) zum Schwingen der Leitung (12) um die Schwingungsachse (B-B);

d. Sensormittel zum Messen der Bewegung des Antriebsmittels, wodurch ein Antriebsbewegungssignal geschaffen wird;

e. Sensormittel (16) zum Messen der Bewegung der Leitung (12) als Ergebnis der elastischen Deformation der Leitung um deren zweite Achse (A-A) bei Schwingung der Leitung mit durch diese hindurchströmendem Fluiddurchfluß, wodurch Bewegungssignale erzeugt werden, und

f. Signalverarbeitungsmittel, welche umfassen:

(1) Mittel zum Messen der Schwingungsfrequenz der Leitung;

(2) Logikmittel zum Umsetzen des Antriebsbewegungssignals in eine Dämpfungsmessung und

(3) Logikmittel, die bei Benutzung die Dämpfungsmessung und die Schwingungsfrequenz in eine frequenzabhängige Funktion und eine Coriolisphasenwinkelfunktion umsetzen, dadurch gekennzeichnet, daß die Signalverarbeitungsmittel weiterhin umfassen:

(4) Logikmittel zum Vergleichen des Antriebsbewegungssignals und eines der Durchflußleitungsbewegungssignale, um eine Phasenwinkeldifferenz zwischen den Signalen zu bestimmen;

(5) Logikmittel zum Umsetzen der Phasenwinkeldifferenz und der Coriolisphasenwinkelfunktion in eine asymmetriekompensierte Halbwinkelfunktion;

(6) Logikmittel zum Umsetzen der asymmetriekompensierten Halbwinkelfunktion in eine Halbwinkeltangentenfunktion und

(7) Logikmittel zum rechnerischen Kombininieren der frequenzabhängigen Funktion, der Schwingunsfrequenz und der Halbwinkeltangentenfunktion mit wenigstens einer Eichkonstanten, und welche Mittel umfassen, die so angeordnet sind, daß der Massedurchfluß (Durchflußrate) $\dot{m}_o$ entsprechend der Beziehung ist

$$\dot{m}_o = K_1 \, k_c \, R \, \frac{\tan\delta\theta° \, /2) \cos\phi_c}{\omega_d}$$

worin

$\delta\theta$ eine Phasenwinkeldifferenz zwischen Ausgangssignalen darstellt, die durch den Antrieb und Durchflußleitungssensoren gebildet werden;

$\delta\theta°$ eine Phasenwinkeldifferenz zwischen Ausgangssignalen ist, welche durch die Durchflußleitungsbewegungssensoren gebildet werden, wenn die Bewegung ungedämpft ist;

$\phi_c$ eine Coriolisphasenwinkelfunktion ist;

$$\tan\delta\frac{\theta°}{2} = \frac{\tan\theta}{\cos^2\phi_c + \tan\delta\theta \cos\phi_c}$$

eine Halbwinkeltangentenfunktion für ungedämpfte Schwingung ist;

$K_1$ eine Eichkonstante ist, die proportional zu dem Verhältnis einer Biegekraft, welche auf die Durchflußleitung wirkt, zu einer zähflüssigen Dämpfungskraft ist, die auf die Durchflußleitung wirkt;

$k_c$ eine elastische Federkonstante der Durchflußleitung ist, welche auf konstanter Temperatur gehalten ist und sonst temperaturkompensiert werden muß;

$$R = \sqrt{\frac{(\omega_c{}^2 - \omega_d{}^2)^2 + (2\omega_c\omega_d\zeta_c)^2}{\omega_c{}^2}}$$

eine Frequenzgangsfunktion ist;

$\omega_d$ eine Resonanzfrequenz der Durchflußleitung um die Schwingungsachse ist;

$\omega_c$ eine Resonanzfrequenz der Durchflußleitung um die zweite Achse ist;

$\zeta_c$ ein Dämpfungskoeffizient um die zweite Achse ist.

13. Durchflußmesser nach Anspruch 12, weiterhin umfassend:

a. Temperaturfühlermittel zum Messen der Leitungstemperatur, wodurch ein Temperatursignal gebildet wird, und

b. Logikmittel zum Umsetzen des Temperatursignals in wenigstens eine temperaturkompensierte Federkonstante; worin

c. diese Logikmittel zum rechnerischen Kombinieren der Frequenzgangsfunktion, der Frequenz und der Halbwinkelfunktion mit wenigstens einer Eichkonstanten Mittel umfassen, die damit auch die temperaturkompensierte Federkonstante rechnerisch kombinieren, wodurch eine Massedurchflußmessung (Durchflußrate) erfolgt.

14. Durchflußmesser nach Anspruch 12, weiterhin umfassend:

a. Temperaturfühlermittel zum Messen der Leitungstemperatur, wodurch ein Temperatursignal gebildet wird;

b. Logikmittel zum Umsetzen des Temperatursignals in eine temperaturkompensierte Federkonstante, welche den Schwingungsfreiheitsgrad der Leitung darstellt und der Leitungsbewegung um die Schwingungsachse entspricht:

c. Logikmittel zum Umsetzen des Temperatursignals in eine temperaturkompensierte Federkonstante, welche den Coriolisfreiheitsgrad der Leitung darstellt und der Leitungsbewegung um die zweite Achse entspricht;

d. Logikmittel zum Umsetzen der Frequenz und der temperaturkompensierten Federkonstanten, welche den Schwingungsfreiheitsgrad darstellt, in eine Fluiddichte;

e. Logikmittel zum Umsetzen der temperaturkompensierten Federkonstanten, welche den Coriolisfreiheitsgrad darstellt, und der Fluiddichte in eine Coriolisresonanzfrequenz; und

f. Logikmittel zum Umsetzen der Coriolisresonanzfrequenz, der Frequenz der Schwingung und der Dämpfungsmessung in eine Frequenzgangsfunktion, wodurch Dichteänderungen korrigiert werden; wobei

g. die Logikmittel zum rechnerischen Kombinieren der Frequenzgangsfunktion, der Frequenz und der

EP 0 324 019 B1

Halbwinkeltangentenfunktion mit wenigstens einer Eichkonstanten Mittel umfassen, die auch die Coriolisfederkonstante damit rechnerisch kombinieren,
wodurch eine Massedurchflußmessung (Durchflußrate) erfolgt.

**15.** Durchflußmesser für fließfähige Materialien, umfassend:

a. einen Träger (22)

b. eine fortlaufende Leitung (12), die

(1) frei von druckempfindlichen Verbindungen ist,

(2) an dem Träger (22) bei einem Einlaßende und einem Auslaßende der Leitung (12) fest montiert ist,

(3) eine Schwingungsachse (B-B) und eine zweite Achse (A-A) hat, welche im wesentlichen quer zu der Schwingungsachse (B-B) verläuft, um welche die Corioliskraft wirkt, wenn Fluid durch die Leitung (12) bei Schwingungsbedingungen fließt;

c. Antriebsmittel (14) zum Schwingen der Leitung (12) um die Schwingungsachse (B-B);

d. Sensormittel, um die Bewegung der Antriebsmittel zu messen und dadurch ein Antriebsbewegungssignal zu bilden;

e. Sensormittel (16), um die Bewegung der Leitung (12) als Ergebnis einer elastischen Verformung der Leitung um deren zweite Achse (A-A) bei Schwingung der Leitung bei hindurchströmendem Fluiddurchfluß zu messen, wodurch Bewegungssignale gebildet werden; und

f. Signalverarbeitungsmittel, die umfassen:

(1) Mittel zum Messen der Schwingungsfrequenz der Leitung und

(2) Logikmittel zum Umsetzen des Antriebsbewegungssignals in eine Dämpfungsmessung;

(3) Logikmittel zum Umsetzen der Schwingungsfrequenz und der Dämpfungsmessung in eine Frequenzgangsfunktion;

(4) Logikmittel zum Vergleichen der Bewegungssignale, um eine Phasenwinkeldifferenz zwischen den Signalen zu bestimmen;

(5) Logikmittel zum Umsetzen der Phasenwinkeldifferenz in eine Halbwinkeltangentenfunktion der Phasenwinkeldifferenz; und

(6) Logikmittel zum rechnerischen Kombinieren der Frequenzgangsfunktion, der Schwingungsfrequenz und der Halbwinkeltangentenfunktion mit wenigstens einer Eichkonstanten, und die umfassen:

Mittel zum Errechnen des Massedurchflusses (Durchflußrate) $\dot{m}_o$ entsprechend der Beziehung

$$\dot{m}_o \;=\; K_1\, k_c\, R\, \frac{\tan(\delta\theta^\circ/2)}{\omega_d}\, \cos\phi_c$$

worin

$\delta\theta^\circ$ eine Phasenwinkeldifferenz zwischen Ausgangssignalen ist, die durch die Bewegungssensoren für eine ungedämpfte Bewegung entwickelt wird;

$\phi_c$ eine Coriolisphasenwinkelfunktion ist;

$\delta\theta_1$ eine Phasenwinkeldifferenz zwischen einem Bewegungssensor und dem Mittelpunkt der Durchdurchflußleitung ist;

$\delta\theta_2$ eine Phasenwinkeldifferenz zwischen dem anderen Bewegungssensor und dem Durchflußleitungsmittelmittelpunkt ist

$$\tan\left(\frac{\delta\theta^\circ}{2}\right) = \frac{\sqrt{1 + \tan^2(\delta\theta_1 + \delta\theta_2)\,\sec^2\phi_c} - 1}{\tan(\delta\theta_1 + \delta\theta_2)}$$

eine Halbwinkeltangentenfunktion ist;

$K_1$ eine Eichkonstante proportional einem Verhältnis einer Biegungskraft, welche auf die Durchflußleitung einwirkt, zu einer zähflüssigen Dämpfungskraft ist, die auf die Durchflußleitung wirkt;

$k_c$ eine elastische Federkonstante der Durchflußleitung ist, die auf konstanter Temperatur gehalten wird, aber sonst temperaturkompensiert werden muß;

$$R = \frac{\sqrt{(\omega_c^2 - \omega_d^2)^2 + (2\omega_c\omega_c\zeta_c)^2}}{\omega_c^2}$$

eine Frequenzgangsfunktion ist;

$\omega_d$ eine Resonanzfrequenz der Durchflußleitung um die Schwingungsachse ist;

$\omega_c$ eine Resonanzfrequenz der Durchflußleitung um die zweite Achse ist;

$\zeta_c$ ein Dämpfungskoeffizient um die zweite Achse ist.

**16.** Durchflußmesser gemäß Anspruch 15,
worin die Sensormittel zum Messen der Bewegung der Leitung umfassen:
(1) erste Sensormittel zum Messen der Bewegung der Leitung an einer ersten Stelle entlang der Leitung, wodurch ein erstes Bewegungssignal gebildet wird, und
(2) zweite Sensormittel zum Messen der Bewegung der Leitung an einer zweiten Stelle entlang der Leitung, wodurch ein zweites Bewegungssignal geschaffen wird.

**17.** Durchflußmesser nach Anspruch 15, weiterhin umfassend:
a. Temperaturfühlermittel zum Messen der Leitungstemperatur, wodurch ein Temperatursignal gebildet wird, und
b. Logikmittel zum Umsetzen des Temperatursignals in wenigstens eine temperaturkompensierte Federkonstante, worin
c. die Logikmittel zum rechnerischen Kombinieren der Frequenzgangsfunktion, der Frequenz und der Halbwinkeltangentenfunktion mit wenigstens einer Eichkonstanten Mittel auch zum Kombinieren der temperaturkompensierten Federkonstanten damit umfaßt,
wodurch eine Massedurchflußmessung (Durchflußrate) erfolgt.

**18.** Durchflußmesser nach Anspruch 15, weiterhin umfassend:
a. Temperatursensormittel zum Messen einer Leitungstemperatur, wodurch ein Temperatursignal gebildet wird,
b. Logikmittel zum Umsetzen des Temperatusignals in eine temperaturkompensierte Federkonstante, welche den Schwingungsfreiheitsgrad der Leitung darstellt und der Schwingungsbewegung um die Schwingungsachse entspricht;
c. Logikmittel zum Umsetzen des Temperatursignals in eine temperaturkompensierte Federkonstante, welche den Coriolisfreiheitsgrad der Leitung darstellt und der Leitungsbewegungum die zweite Achse entspricht;
d. Logikmittel zum Umsetzen der temperaturkompensierten Federkonstanten, welche den Schwingungsfreiheitsgrad darstellt, und der Schwingungsfrequenz in eine Fluiddichte;
e. Logikmittel zum Umsetzen der temperaturkompensierten Federkonstante, welche den Coriolisfreiheitsgrad darstellt, und Fluiddichte in eine Coriolisresonanzfrequenz, und
f. Logikmittel zum Umsetzen der Coriolisresonanzfrequenz, der Schwingungsfrequenz und der Dämpfungsmessung in eine Frequenzgangsfunktion, wodurch Dichteänderungen korrigiert werden; worin
g. die Logikmittel zum rechnerischen Kombinieren der Frequenz, der Frequenzgangsfunktion und der Halbwinkeltangentenfunktion mit weningstens einer Eichkonstanten Mittel umfassen, um damit auch die temperaturkompensierte Federkonstante zu kombinieren, welche den Coriolisfreiheitsgrad darstellt, wodurch eine Massedurchflußmessung (Durchflußrate) erfolgt.

**Revendications**

**1.** Débitmètre (10) pour des matériaux pouvant s'écouler comprenant :
a. un support (22),
b. un conduit continu (12) qui
(1) est libre de tout joint sensible à une pression,
(2) est fermement monté sur le support (22) à une extrémité d'entrée et à une extrémité de sortie du conduit (12),
(3) a un axe d'oscillation (B-B) et un second axe (A-A), à peu près perpendiculaire à l'axe d'oscillation (B-B), autour duquel agit une force de Coriolis lorsque le fluide s'écoule à travers le conduit (12) dans des conditions d'oscillation,
c. des moyens d'entraînement (14) destinés à faire osciller le conduit (12) autour dudit axe d'oscillation (B-B),
d. des moyens formant capteur (16) pour mesurer le mouvement du conduit (12) résultant d'une déformation élastique du conduit (12) autour de son second axe (A-A) lors d'une oscillation du conduit (12) à travers lequel s'écoule un fluide, fournissant ainsi des signaux de mouvement, et,
e. des moyens de traitement d'un signal comprenant :
(1) des moyens pour mesurer la fréquence d'oscillation du conduit (12),

(2) des moyens logiques pour transformer ladite fréquence d'oscillation en une fonction variant avec la fréquence,

(3) des moyens logiques pour comparer lesdits signaux de mouvement pour déterminer une différence d'angle de phase entre lesdits signaux, et

(4) des moyens logiques pour transformer ladite différence d'angle de phase en fonction tangente du demi-angle de ladite différence d'angle de phase,

des moyens de traitement d'un signal comportant:

des moyens logiques pour combiner mathématiquement ladite fonction variant avec la fréquence, ladite fréquence d'oscillation et ladite fonction tangente de demi-angle avec au moins une constante d'étalonnage et qui comportent :

des moyens qui sont prévus pour calculer le débit massique $m_0$ selon la formule

$$m_0 = K_1 k_c R \frac{\tan(\delta\theta°/2)}{\omega_d}$$

dans laquelle :

$\delta\theta°$ est une différence d'angle de phase entre les signaux de sortie émis par lesdits capteurs de mouvement,

$\tan(\delta\theta°/2)$ est la fonction tangente d'un demi-angle,

$K_1$ est une constante d'étalonnage proportionnelle à un rapport de la force de flexion agissant sur ledit conduit d'écoulement à une force d'amortissement visqueux agissant sur le conduit d'écoulement,

$k_c$ est une constante de ressort élastique du conduit d'écoulement qui est fixée pour une température constante et qui est compensée à une autre température,

$$R = \frac{\sqrt{(\omega_c^2 - \omega_d^2)^2 + (2\omega_c\omega_d\zeta_c)^2}}{\omega_c^2}$$

est une fonction variant avec la fréquence,

$\omega_d$ est une fréquence naturelle du conduit d'écoulement autour dudit axe d'oscillation,

$\omega_c$ est une fréquence naturelle dudit conduit d'écoulement autour dudit second axe,

$\zeta_c$ est un coefficient d'amortissement autour dudit second axe,

de sorte qu'on obtient la mesure du débit massique.

2. Débitmètre selon la revendication 1, dans lequel :

a. lesdits moyens formant capteur comportent des premiers moyens formant capteur destinés à mesurer le mouvement dudit conduit (12) en un premier emplacement le long du conduit (12), fournissant ainsi un premier signal de mouvement, et

des seconds moyens formant capteur destinés à mesurer le mouvement dudit conduit (12) en un second emplacement le long du conduit (12), fournissant ainsi un second signal de mouvement, et

b. dans lesdits moyens de traitement d'un signal, lesdits moyens de mesure de la fréquence d'oscillation du conduit (12) comportent :

(i) des moyens logiques pour comparer lesdits premier et second signaux de mouvement pour déterminer une différence d'angle de phase entre lesdits signaux, et

(ii) des moyens pour transformer au moins un desdits premier et second signaux de mouvement en une fréquence d'oscillation.

3. Débitmètre selon la revendication 2, dans lequel lesdits moyens pour transformer au moins l'un desdits premier et second signaux de mouvement en une fréquence d'oscillation comportent :

a. des moyens pour transformer ledit premier signal de mouvement en une première fréquence d'oscillation,

b. des moyens pour transformer ledit second signal de mouvement en une seconde fréquence d'oscillation et

c. des moyens logiques pour faire la moyenne desdites première et seconde fréquences d'oscillation.

4. Débitmètre selon la revendication 1, dans lequel :

a. ledit capteur comporte :

des premiers moyens formant capteur destinés à mesurer le mouvement du conduit en un premier emplacement situé le long du conduit, fournissant ainsi un premier signal de mouvement et

des seconds moyens formant capteur destinés à mesurer le mouvement dudit conduit en un second emplacement situé le long du conduit, fournissant ainsi un second signal de mouvement,

b. dans lesdits moyens de traitement d'un signal

(1) les moyens pour mesurer la fréquence d'oscillation dudit conduit comportent :

(i) des moyens formant capteur pour détecter un signal de mouvement d'entraînement et

(ii) des moyens logiques pour mesurer une fréquence d'oscillation dudit conduit,

(2) les moyens logiques pour transformer lesdits signaux de mouvement comportent des moyens logiques destinés à comparer lesdits premier et second signaux de mouvement pour déterminer une différence d'angle de phase de capteurs de mouvement, et

(3) les moyens logiques pour transformer ladite différence d'angle de phase comportent :

(i) des moyens pour diviser par 2 la différence d'angle de phase des capteurs de mouvement pour obtenir une différence des demi-angles de phase des capteurs de mouvement,

(ii) des moyens logiques pour comparer ledit premier signal de mouvement et le signal de mouvement d'entraînement pour déterminer une première différence d'angle de phase entre ledit premier signal de mouvement et ledit signal de mouvement d'entraînement,

(iii) des moyens logiques destinés à transformer ladite première différence d'angle de phase en une première différence d'angle de phase d'asymétrie compensée,

(iv) des moyens logiques destinés à comparer ledit second signal de mouvement et ledit signal de mouvement d'entraînement pour déterminer une seconde différence d'angle de phase entre le second signal de mouvement et le signal de mouvement d'entraînement,

(v) des moyens logiques pour transformer la seconde différence d'angle de phase en une seconde différence d'angle de phase d'asymétrie compensée,

(vi) des moyens logiques pour comparer ladite différence de demi-angle de phase des capteurs de mouvement, ladite première différence d'angle d'asymétrie compensée et ladite seconde différence d'angle de phase d'asymétrie compensée pour fournir une différence de demi-angle de phase du dispositif et

(vii) des moyens logiques pour transformer ladite différence de demi-angle de phase du dispositif en une fonction tangente de demi-angle.

**5.** Débitmètre selon la revendication 4, dans lequel

a. lesdits moyens logiques pour transformer ladite première différence d'angle de phase en une première différence d'angle de phase d'asymétrie compensée comportent des moyens de conversion correspondant à la formule

$$\tan\delta\theta_R = \frac{\tan(\delta\theta_1/2)\cos\phi_c}{1 - \tan(\delta\theta_1/2)\sin\phi_c}$$

b. lesdits moyens logiques pour transformer ladite seconde différence d'angle de phase en une seconde différence d'angle de phase d'asymétrie compensée comportent des moyens de transformation correspondant à la formule

$$\tan\delta\theta_L = \frac{\tan(\delta\theta_2/2)\cos\phi_c}{1 + \tan(\delta\theta_2/2)\sin\phi_c}$$

dans lesquelles $\delta\theta_R$ est ladite première différence d'angle de phase,

$\delta\theta_1$ est ladite première différence d'angle de phase d'asymétrie compensée,

$\phi_c$ est une fonction de l'angle de phase de Coriolis,

$\delta\theta_L$ est ladite seconde différence d'angle de phase et

$\delta\theta_2$ est ladite seconde différence d'angle de phase d'asymétrie compensée, et

c. lesdits moyens logiques pour comparer ladite différence de demi-angle de phase de capteur de mouvement, ladite première différence d'angle de phase d'asymétrie compensée et ladite seconde différence d'angle de phase d'asymétrie compensée pour fournir une différence de demi-angle de phase du dispositif comportent des moyens pour le faire en correspondance avec les relations :

(1)    si $1/2\delta\theta_0 = 1/2\delta\theta_1 = 1/2\delta\theta_{2'}$, alors $1/2\delta\theta° = 1/2\delta\theta_0$,

(2)    si $1/2\delta\theta \neq 1/2\delta\theta_1 = 1/2\delta\theta_2$, alors $1/2\delta\theta° = 1/2\delta\theta_1$,

(3)    si $1/2\delta\theta = 1/2\delta\theta_1 \neq 1/2\delta\theta_2$, alors $1/2\delta\theta° = 1/2\delta\theta_0$,

(4)    si $1/2\delta\theta = 1/2\delta\theta_2 \neq 1/2\delta\theta_1$, alors $1/2\delta\theta° = 1/2\delta\theta_0$,

de sorte qu'une absence de correspondance de c(1) jusqu'à c(4) fournit un signal d'alarme.

**6.** Débitmètre selon la revendication 1, dans lequel, dans lesdits moyens de traitement d'un signal,

a. les moyens de mesure de la fréquence d'oscillation du conduit comportent

(i) des moyens formant capteur pour détecter un signal de mouvement d'entraînement et

(ii) des moyens logiques pour mesurer une fréquence d'oscillation dudit conduit,

b. les moyens logiques pour comparer les signaux de mouvement comportent des moyens pour comparer au moins l'un desdits signaux de mouvement et ledit signal de mouvement d'entraînement pour déterminer une différence d'angle de phase entre ledit signal de mouvement et ledit signal de mouvement d'entraînement, et

c. les moyens logiques pour transformer ladite différence d'angle de phase comportent

(i) des moyens pour transformer ladite différence d'angle de phase en une différence de demi-angle de phase d'asymétrie compensée et

(ii) des moyens logiques pour transformer ladite différence de demi-angle de phase d'asymétrie compensée en une fonction tangente du demi-angle.

7. Débitmètre selon la revendication 1, comportant en outre :

a. des moyens formant capteur de température destinés à mesurer la température du conduit, fournissant ainsi un signal de température et

b. des moyens logiques pour transformer ledit signal de température en au moins un signal de constante de ressort compensée à la température, dans lequel

lesdits moyens logiques pour combiner mathématiquement ladite fonction variant avec la fréquence, ladite fréquence et ladite fonction tangente de demi-angle avec au moins une constante d'étalonnage comportent des moyens qui combinent également mathématiquement avec celles-ci ledit signal de constante de ressort compensée à la température, produisant ainsi une mesure de débit massique.

8. Débitmètre selon la revendication 1, comprenant en outre :

a. des moyens formant capteur de température pour mesurer la température du conduit, fournissant ainsi un signal de température,

b. des moyens logiques pour transformer ledit signal de température en une constante de ressort compensée à la température représentant le degré de liberté de l'oscillation du conduit et correspondant à un mouvement du conduit autour dudit axe d'oscillation,

c. des moyens logiques pour transformer ledit signal de température en une constante de ressort compensée à la température représentant le degré de liberté de Coriolis dudit conduit et correspondant à un mouvement du conduit autour dudit second axe,

d. des moyens logiques pour transformer ladite constante de ressort compensée à la température représentant le degré de liberté en oscillation et ladite fréquence d'oscillation dudit conduit en une densité du fluide,

e. des moyens logiques pour transformer ladite constante de ressort compensée à la température représentant le degré de liberté de Coriolis dudit conduit et ladite densité de fluide en une fréquence naturelle de Coriolis,

f. des moyens logiques pour transformer ladite fréquence naturelle de Coriolis et ladite fréquence d'oscillation en une fonction variant avec la fréquence, corrigeant ainsi des variations de la densité, dans lequel

g. les moyens logiques qui, en utilisation, combinent mathématiquement ladite fréquence, ladite fonction variant avec la fréquence et ladite fonction tangente de demi-angle avec au moins une constante d'étalonnage comportent des moyens qui combinent également mathématiquement avec ceux-ci ladite constante de ressort compensée à la température représentant le degré de liberté de Coriolis, fournissant ainsi une mesure du débit massique.

9. Débitmètre pour matériau pouvant s'écouler comprenant :

a. un support (22),

b. un conduit continu (12) qui

(1) est libre de tout joint sensible à la pression,

(2) est monté fermement sur ledit support (22) en une extrémité d'entrée et une extrémité de sortie dudit conduit (12),

(3) a un axe d'oscillation (B-B) et un second axe (A-A) sensiblement transversal au dit axe d'oscillation (B-B) autour duquel une force de Coriolis agit lorsqu'un fluide s'écoule à travers le conduit (12) dans des conditions d'oscillation,

c. des moyens d'entraînement (14) pour mettre en oscillation ledit conduit (12) autour dudit axe d'oscillation (B-B),

d. des moyens formant capteur pour mesurer le mouvement des dits moyens d'entraînement (14) fournissant ainsi un signal de mouvement d'entraînement,

e. des moyens formant capteur (16) pour mesurer le mouvement dudit conduit (12) résultant d'une déformation élastique dudit conduit (12) autour de son second axe lors d'une oscillation du conduit à travers lequel s'écoule un fluide, fournissant ainsi des signaux de mouvement, et

f. des moyens de traitement d'un signal comprenant :

(1) des moyens de mesure de la fréquence d'oscillation dudit conduit (12),

(2) des moyens logiques pour transformer ledit signal de mouvement d'entraînement en une mesure d'amortissement,

(3) des moyens logiques pour transformer ladite fréquence d'oscillation et ladite mesure d'amortissement en une fonction variant avec la fréquence et une fonction d'angle de phase de Coriolis,

les moyens de traitement d'un signal comprenant en outre

(4) des moyens logiques pour comparer ledit signal de mouvement d'entraînement et l'un des dits signaux de mouvement de conduit d'écoulement pour déterminer une différence d'angle de phase entre lesdits signaux,

(5) des moyens logiques pour transformer ladite différence d'angle de phase et ladite fonction d'angle de phase de Coriolis en une fonction trigonométrique de ladite différence d'angle de phase, et

(6) des moyens logiques pour combiner mathématiquement ladite fonction variant avec une fréquence, ladite fréquence d'oscillation et ladite fonction trigonométrique avec au moins une constante d'étalonnage, et qui comportent des moyens logiques qui combinent mathématiquement en outre avec ceux-ci ladite mesure d'amortissement, et sont prévus pour calculer le débit massique $m_0$ selon la formule

$$m_0 = K_1 \, K_c \, R \, \frac{1}{\omega_d} \frac{\sin \delta\theta}{\cos (\delta\theta - \phi_c)}$$

dans laquelle

$\delta\theta$ est une différence d'angle de phase entre les signaux de sortie émis par les capteurs de mouvement d'entraînement et les capteurs de mouvement du conduit d'écoulement,

$\phi_c$ est une fonction de l'angle de phase de Coriolis,

$$\frac{\sin \delta\theta}{\cos (\delta\theta - \phi_c)}$$

est une fonction trigonométrique,

$K_1$ est une constante d'étalonnage proportionnelle à un rapport d'une force de flexion agissant sur ledit conduit d'écoule ment à une force d'amortissement visqueux agissant sur ledit conduit d'écoulement,

$K_c$ est une constante de ressort élastique dudit conduit d'écoulement, qui est fixée pour une température constante et dans un autre cas est compensée à la température,

$$R = \frac{\sqrt{(\omega_c{}^2 - \omega_d{}^2)^2 + (2\omega_c\omega_d\zeta_c)^2}}{\omega_c{}^2}$$

est une fonction sensible à la fréquence,

$\omega_d$ est une fréquence naturelle dudit conduit d'écoulement autour dudit axe d'oscillation,

$\omega_c$ est une fréquence naturelle dudit conduit d'écoulement autour dudit second axe,

$\zeta_c$ est un coefficient d'amortissement autour dudit second axe.

**10.** Débitmètre selon la revendication 9, comprenant en outre :

a. des moyens formant capteur de température pour mesurer la température du conduit, fournissant ainsi un signal de température, et

b. des moyens logiques pour transformer ledit signal de température en au moins une constante de ressort compensée à la température, dans lequel

c. lesdits moyens logiques pour combiner mathématiquement ladite fonction variant avec une fréquence, ladite fréquence et ladite fonction trigonométrique avec au moins une constante d'étalonnage comportent des moyens qui combinent également mathématiquement avec celles-ci ladite constante de ressort compensée à la température, produisant ainsi une mesure de débit massique.

**11.** Débitmètre selon la revendication 9, comprenant en outre :

a. des moyens formant capteur de température pour mesurer la température du conduit, produisant ainsi un signal de température,

b. des moyens logiques pour transformer ledit signal de température en une constante de ressort compensée à la température représentant le degré de liberté d'oscillation dudit conduit et correspondant à un mouvement du conduit autour dudit axe d'oscillation,

c. des moyens logiques pour transformer ledit signal de température en une constante de ressort compensée à la température représentant le degré de liberté de Coriolis dudit conduit et correspondant à un mouvement du conduit autour dudit second axe,

d. des moyens logiques pour transformer ladite constante de ressort compensée à la température représentant le degré de liberté en oscillation du conduit et ladite fréquence d'oscillation en une densité de fluide,

e. des moyens logiques pour transformer ladite constante de ressort compensée à la température représentant le degré de liberté de Coriolis dudit conduit et ladite densité de fluide en une fréquence naturelle de Coriolis et

f. des moyens logiques pour transformer ladite fréquence naturelle Coriolis, ladite fréquence d'oscillation et ladite mesure d'amortissement en une fonction variant avec la fréquence, corrigeant ainsi des variations de densité; dans lequel

g. les moyens logiques pour combiner mathématiquement ladite fonction variant avec une fréquence, ladite fréquence et ladite fonction trigonométrique avec au moins une constante d'étalonnage comportent des moyens qui combinent également mathématiquement avec celles-ci ladite constante de ressort compensée à la température représentant le degré de liberté de Coriolis, produisant ainsi une mesure du débit massique.

12. Débitmètre (10) pour matériau pouvant s'écouler comprenant :

a. un support (22),

b. un conduit continu qui

(1) est libre de tout joint sensible à la pression,

(2) est monté solidement sur ledit support (22) en une extrémité d'entrée et une extrémité de sortie dudit conduit (12),

(3) a un axe d'oscillation (B-B) et un second axe (A-A), sensiblement transversal audit axe d'oscillation (B-B), autour duquel une force de Coriolis agit lorsqu'un fluide s'écoule à travers ledit conduit (12) dans des conditions d'oscillation,

c. des moyens d'entraînement (14) pour faire osciller ledit conduit (12) autour dudit axe d'oscillation (B-B),

d. des moyens formant capteur pour mesurer le mouvement desdits moyens d'entraînement, produisant ainsi un signal de mouvement d'entraînement,

e. des moyens formant capteur (16) pour mesurer le mouvement dudit conduit (12) qui résulte d'une déformation élastique dudit conduit autour de son second axe (A-A) lors d'une oscillation du conduit traversé par un écoulement de fluide, fournissant ainsi des signaux de mouvement, et

f. des moyens de traitement d'un signal comprenant :

(1) des moyens de mesure de la fréquence d'oscillation dudit conduit,

(2) des moyens logiques pour transformer ledit signal de mouvement d'entraînement en une mesure d'amortissement,

(3) des moyens logiques qui, en utilisation, transforment ladite mesure d'amortissement et ladite fréquence d'oscillation en une fonction variant avec la fréquence et une fonction d'angle de phase de Coriolis,

caractérisé en ce que les moyens de traitement d'un signal comportent en outre :

(4) des moyens logiques pour comparer ledit signal de mouvement d'entraînement et un desdits signaux de mouvement de conduit d'écoulement pour déterminer une différence d'angle de phase entre lesdits signaux,

(5) des moyens logiques pour transformer ladite différence d'angle de phase et ladite fonction d'angle de phase de Coriolis en une fonction de demi-angle d'asymétrie compensée,

(6) des moyens logiques pour transformer ladite fonction de demi-angle d'asymétrie compensée en une fonction tangente de demi-angle, et

(7) des moyens logiques pour combiner mathématiquement ladite fonction variant avec une fréquence, ladite fréquence d'oscillation et ladite fonction tangente de demi-angle avec au moins une constante d'étalonnage et qui comportent des moyens qui sont prévus pour calculer le débit massique $m_0$ selon la formule :

$$m_0 = K_1 \, k_c \, R \, \frac{\tan(\delta\theta°/2)\cos\phi_c}{\omega_d}$$

dans laquelle

$\delta\theta$ est une différence d'angle de phase entre les signaux de sortie émis par lesdits capteurs de mouvement d'entraînement et lesdits capteurs de mouvement du conduit d'écoulement,

$\delta\theta°$ est une différence d'angle de phase entre les signaux de sortie émis par lesdits capteurs de mouvement du conduit d'écoulement lorsque ledit mouvement n'est pas amorti,

$\phi_c$ est une fonction de l'angle de phase de Coriolis

$$\tan \frac{\delta\theta°}{2} = \frac{\tan \delta\theta}{\cos^2 \phi_c + \tan \delta\theta \cos \phi_c}$$

est une fonction de la tangente du demi-angle pour un mouvement non amorti,

$K_1$ est une constante d'étalonnage proportionnelle à un rapport de la force de flexion agissant sur ledit conduit d'écoulement à une force d'amortisse ment visqueux agissant sur ledit conduit d'écoulement,

$k_c$ est une constante de ressort élastique dudit conduit d'écoulement qui est fixée pour une température constante et dans un autre cas doit être compensée par rapport à la température,

$$R = \frac{\sqrt{(\omega_c^2 - \omega_d^2)^2 + (2\omega_c\omega_d\zeta_c)^2\omega}}{\omega_c^2}$$

est une fonction variant avec la fréquence,

$\omega_d$ est une fréquence naturelle du conduit d'écoulement autour dudit axe d'oscillation,

$\omega_c$ est une fréquence naturelle dudit conduit d'écoulement autour dudit second axe,

$\zeta_c$ est un coefficient d'amortissement autour dudit second axe

fournissant ainsi une mesure du débit massique.

13. Débitmètre selon la revendication 12, comportant en outre :

(a) des moyens formant capteur de température pour mesurer la température du conduit, fournissant ainsi un signal de température et

(b) des moyens logiques pour transformer ledit signal de température en au moins une constante de ressort compensée à la température, dans lequel

(c) lesdits moyens logiques pour combiner mathématiquement ladite fonction variant avec une fréquence, ladite fréquence et ladite fonction tangente d'un demi-angle avec au moins une constante d'étalonnage comportent des moyens qui combinent également mathématiquement celles-ci à ladite constante de ressort compensée à la température, fournissant ainsi une mesure du débit massique.

14. Débitmètre selon la revendication 12, comportant en outre

a. des moyens formant capteur de température pour mesurer la température du conduit, fournissant ainsi un signal de température,

b. des moyens logiques pour transformer ledit signal de température en une constante de ressort compensée à la température représentant le degré de liberté d'oscillation dudit conduit et correspondant à un mouvement du conduit autour dudit axe d'oscillation,

c. des moyens logiques pour transformer ledit signal de température en une constante de ressort compensée à la température représentant le degré de liberté de Coriolis dudit conduit et correspondant à un mouvement du conduit autour dudit second axe,

d. des moyens logiques pour transformer ladite fréquence et ladite constante de ressort compensée à la température représentant le degré de liberté d'oscillation en une densité de fluide,

e. des moyens logiques pour transformer ladite constante de ressort compensée à la température représentant le degré de liberté de Coriolis et ladite densité de fluide en une fréquence naturelle de Coriolis, et

f. des moyens logiques pour transformer ladite fréquence naturelle de Coriolis, ladite fréquence d'oscillation et ladite mesure d'amortissement en une fonction variant avec la fréquence, corrigeant ainsi des variations de densité, dans lequel

g. les dits moyens logiques pour combiner mathématiquement ladite fonction variant avec une fréquence, ladite fréquence et ladite fonction tangente d'un demi-angle avec au moins une constante d'étalonnage comportent des moyens qui combinent également mathématiquement avec celles-ci ladite constante de ressort de Coriolis, produisant ainsi une mesure du débit massique.

15. Débitmètre pour matériau pouvant s'écouler comprenant :

a. un support (22),

b. un conduit continu (12) qui

(1) est libre de tout joint sensible à la pression,

(2) est monté solidement sur ledit support (22) en une extrémité d'entrée et une extrémité de sortie dudit conduit (12),

(3) a un axe d'oscillation (B-B) et un second axe (A-A), à peu près transversal audit axe d'oscillation (B-B), autour duquel une force de Coriolis agit lorsqu'un fluide s'écoule à travers ledit conduit (12) dans des conditions d'oscillation,

EP 0 324 019 B1

c. des moyens d'entraînement (14) pour faire osciller ledit conduit (12) autour dudit axe d'oscillation (B-B),

d. des moyens formant capteur pour mesurer le mouvement desdits moyens d'entraînement, produisant ainsi un signal de mouvement d'entraînement,

e. des moyens formant capteur (16) pour mesurer le mouvement dudit conduit (12) résultant d'une déformation élastique dudit conduit autour de son second axe (A-A) lors d'une oscillation dudit conduit (12) ayant un écoulement de fluide le traversant, fournissant ainsi des signaux de mouvement, et

f. des moyens de traitement d'un signal comprenant :

(1) des moyens de mesure de la fréquence d'oscillation dudit conduit,et

(2) des moyens logiques pour transformer ledit signal de mouvement d'entraînement en une mesure d'amortissement,

(3) des moyens logiques pour transformer ladite fréquence d'oscillation et ladite mesure d'amortissement en une fonction variant avec la fréquence,

(4) des moyens logiques pour comparer lesdits signaux de mouvement pour déterminer une différence d'angle de phase entre lesdits signaux,

(5) des moyens logiques pour transformer ladite différence d'angle de phase en une fonction tangente du demi-angle de ladite différence d'angle de phase,et

(6) des moyens logiques pour combiner mathématiquement ladite fonction variant avec une fréquence, ladite fréquence d'oscillation et ladite fonction tangente du demi-angle avec au moins une constante d'étalonnage, et qui comportent des moyens pour calculer le débit massique $\dot{m}_0$ selon la formule

$$\dot{m}_0 = K_1 \, k_c \, R \, \frac{\tan(\delta\theta°/2)}{\omega_d} \cos\phi_c$$

dans laquelle

$\delta\theta°$ est une différence d'angle de phase entre les signaux de sortie émis par lesdits capteurs de mouvement pour un mouvement non amorti,

$\phi_c$ est une fonction d'angle de phase de Coriolis,

$\delta\theta_1$ est une différence d'angle de phase entre un capteur de mouvement et le point central du conduit d'écoulement,

$\delta\theta_2$ est une différence d'angle de phase entre l'autre capteur de mouvement et le point central du conduit d'écoulement,

$$\tan\left(\frac{\delta\theta°}{2}\right) = \frac{\sqrt{1 + \tan^2(\delta\theta_1 + \delta\theta_2)\sec^2\phi_c} - 1}{\tan(\delta\theta_1 + \delta\theta_2)}$$

est une fonction tangente du demi-angle,

$K_1$ est une constante d'étalonnage proportionnelle à un rapport de la force de flexion agissant sur ledit conduit d'écoulement à une force d'amortissement visqueux agissant sur ledit conduit d'écoulement,

$k_c$ est une constante de ressort élastique dudit conduit d'écoulement qui est fixée pour une température constante mais dans un autre cas doit être compensée en fonction de la température,

$$R = \frac{\sqrt{(\omega_c^2 - \omega_d^2)^2 + (2\omega_c\omega_c\zeta_c)^2}}{\omega_c^2}$$

est une fonction variant avec la fréquence,

$\omega_d$ est une fréquence naturelle dudit conduit d'écoulement autour dudit axe d'oscillation,

$\omega_c$ est une fréquence naturelle dudit conduit d'écoulement autour dudit second axe,

$\zeta_c$ est un coefficient d'amortissement autour dudit second axe.

16. Débitmètre selon la revendication 15, dans lequel lesdits moyens formant capteur pour mesurer un mouvement du conduit comportent

(1) des premiers moyens formant capteur pour mesurer le mouvement dudit conduit en un premier emplacement situé le long dudit conduit, fournissant ainsi un premier signal de mouvement et

(2) des seconds moyens formant capteur pour mesurer un mouvement dudit conduit en un second emplacement situé le long dudit conduit, fournissant ainsi un second signal de mouvement.

17. Débitmètre selon la revendication 15, comprenant en outre :

48

a. des moyens formant capteur de température pour mesurer la température du conduit, fournissant ainsi un signal de température et

b. des moyens logiques pour transformer ledit signal de température en au moins une constante de ressort compensée à la température, dans lequel

c. lesdits moyens logiques pour combiner mathématiquement ladite fonction variant avec une fréquence, ladite fréquence et ladite fonction tangente du demi-angle avec au moins une constante d'étalonnage comportent des moyens pour combiner également mathématiquement celles-ci avec ladite constante de ressort compensée à la température, fournissant ainsi une mesure du débit massique.

**18.** Débitmètre selon la revendication 15, comprenant en outre :

a. des moyens formant capteur de température pour mesurer la température du conduit, fournissant ainsi un signal de température,

b. des moyens logiques pour transformer ledit signal de température en une constante de ressort compensée à la température représentant le degré de liberté en oscillation dudit conduit et correspondant à un mouvement du conduit autour dudit axe d'oscillation;

c. des moyens logiques pour transformer ledit signal de température en une constante de ressort compensée à la température représentant le degré de liberté de Coriolis dudit conduit et correspondant à un mouvement du conduit autour dudit second axe,

d. des moyens logiques pour transformer ladite constante de ressort compensée à la température représentant le degré de liberté en oscillation et ladite fréquence d'oscillation en une densité de fluide;

e. des moyens logiques pour transformer ladite constante de ressort compensée à la température représentant le degré de liberté de Coriolis et ladite densité de fluide en une fréquence naturelle de Coriolis, et

f. des moyens logiques pour transformer ladite fréquence naturelle de Coriolis, ladite fréquence d'oscillation et ladite mesure d'amortissement en une fonction variant avec la fréquence, corrigeant ainsi des variations de densité, dans lequel

g. les dits moyens logiques pour combiner mathématiquement ladite fréquence, ladite fonction variant avec la fréquence et ladite fonction tangente du demi-angle avec au moins une constante d'étalonnage comportent des moyens pour combiner également avec celles-ci ladite constante de ressort compensée à la température représentant le degré de liberté de Coriolis, produisant ainsi une mesure de débit massique.

FIG 1

FIG 2

FIG 3

FIG 4

FIG 5

$$FIG\ 6$$

EP 0 324 019 B1

FIG 7

55

FIG 8

TEMP. SENSOR — 203

T

TEMPERATURE COMPENSATION — 215

$k_b(T), k_c(T)$

$k_c(T)$

FREQUENCY MEASURENT — 205

$\omega_d$

FREQUENCY RESPONSE FUNCTION — 213

R

MOTION SENSOR — 201

DRIVER — 204

MOTION SENSOR — 202

$\dot{u}_1(\theta_1)$

$V_d(\theta_d)$

$\dot{u}_2(\theta_2)$

PHASE DETECTOR — 206

$\frac{\delta\theta^0}{2} + \epsilon$

ASSYMETRY COMPENSATION — 209

$\frac{\delta\theta_1}{2}$

PHASE DETECTOR — 207

$\delta\theta_0$

DIVIDER — 210

$\frac{\delta\theta_0}{2}$

PHASE DETECTOR — 208

$\frac{\delta\theta^0}{2} - \epsilon$

ASSYMETRY COMPENSATION — 211

$\frac{\delta\theta_2}{2}$

LOGIC — 212

$\frac{d\theta^0}{2}$

HALF ANGLE TANGENT FUNCTION — 214

$\tan\left(\frac{\delta\theta^0}{2}\right)$

MATHEMATICS — 216

$\dot{m}_0$

56

# FIG 9

Input: $\frac{1}{2}\delta\theta_0,$ $\frac{1}{2}\delta\theta_1,$ $\frac{1}{2}\delta\theta_2$

Decision 1: $\frac{1}{2}\delta\theta_0 = \frac{1}{2}\delta\theta_1 = \frac{1}{2}\delta\theta_2 = \underline{\quad}$

YES → $\frac{1}{2}\delta\theta = \frac{1}{2}\delta\theta_0$

NO ↓

Decision 2: $\frac{1}{2}\delta\theta_0 \neq \frac{1}{2}\delta\theta_1 = \frac{1}{2}\delta\theta_2$

YES → $\frac{1}{2}\delta\theta = \frac{1}{2}\delta\theta_1$

NO ↓

Decision 3: $\frac{1}{2}\delta\theta_0 = \frac{1}{2}\delta\theta_1 \neq \frac{1}{2}\delta\theta_2$

YES → $\frac{1}{2}\delta\theta = \frac{1}{2}\delta\theta_0$

NO ↓

Decision 4: $\frac{1}{2}\delta\theta_0 = \frac{1}{2}\delta\theta_2 \neq \frac{1}{2}\delta\theta_1$

YES → $\frac{1}{2}\delta\theta = \frac{1}{2}\delta\theta_0$

NO ↓

WARNING

Output: $\frac{\delta\theta^0}{2}$

57

FIG 10

301 MOTION SENSOR

$\dot{u}_i(\theta_i)$

304 PHASE DETECTOR

$\frac{\delta\theta^o}{2} + \epsilon$

306 ASSYMETRY COMPENSATION

$\frac{\delta\theta^o}{2}$

307 HALF ANGLE TANGENT FUNCTION

$\tan\left(\frac{\delta\theta^o}{2}\right)$

310 MATHEMATICS

$\dot{m}_o$

$\theta_d$

302 DRIVER

$V_d$
$V_d(\theta_d)$

305 FREQUENCY MEASUREMENT

$\omega_d$

308 FREQUENCY RESPONSE FUNCTION

R

303 TEMP. SENSOR

T

209 TEMPERATURE COMPENSATION

$k_b(T), k_c(T)$

$k_c(T)$

EP 0 324 019 B1

EP 0 324 019 B1

# FIG 11

MOTION SENSOR _401_

$\dot{u}_1(\Theta_1)$

PHASE DETECTOR _404_

$\delta\Theta_1$

TRIGONOMETRIC FUNCTION _407_

$\dfrac{\sin(\delta\Theta_1)}{\cos(\delta\Theta_1 - \phi_c)}$

MATHEMATICS _410_

$\dot{m}_o$

DRIVER _402_

$V_d(\Theta_d)$

$\Theta_d$

$V_d$

FREQUENCY MEASUREMENT _405_

$\omega_d$

$\phi_c$

FREQUENCY RESPONSE FUNCTION _408_

$R, \phi_c$

$V_d$

DAMPING MEASUREMENT _406_

$\zeta_c$

TEMPERATURE SENSOR _403_

$T$

TEMPERATURE COMPENSATION _409_

$K_b(T), K_c(T)$

$K_c(T)$

FIG 12

FIG 13